# EUROPEAN PATENT APPLICATION

(11) **EP 3 166 066 A1**
(43) Date of publication of application: **10.05.2017**
(21) Application number: 16197549.5
(22) Date of filing: 07.11.2016
(51) Int. Cl.: G06Q 40/04, G06Q 50/00

(54) **A COMMUNITY-BASED ALERT PLATFORM FOR RETAIL TRADERS AND INVESTORS ON A GLOBAL SCALE**

(30) Priority: 06.11.2015 PT 2015108939
(71) Applicant: Espada Dos Santos, Hugo Alexandre, 2820-142 Charneca Da Caparica (PT)
(72) Inventor: Espada Dos Santos, Hugo Alexandre, 2820-142 Charneca Da Caparica (PT)
(74) Representative: Grünecker Patent- und Rechtsanwälte PartG mbB

(57) **Abstract**

A social network that aims to bring retail traders and retail investors together into an online platform for mutual benefit. More specifically, a community-based alert platform, in which retail traders develop and submit their trading algorithms to be hosted by the platform with the purpose to generate trading alerts to retail investors and other traders who subscribe to them. Further presented is a system and methods to scale the platform to reach worldwide scale.

## Description

### Technical domain of the invention

The present invention relates to a social network of retail traders and investors that meet online for mutual benefit. It relates to an online platform, community-based, that hosts and runs trading algorithms users submit, which generate trading alerts on hopefully good investment opportunities to its subscribers.

### Background of the invention

Retail investors have become increasingly savvy and confortable in doing all kinds of things online. Modern investors (the so-called "Millennials") and future generations reach the internet for a multitude of everyday things: from buying goods, furniture, clothing, electronics, etc. in e-commerce sites, sharing photos and videos, stay in touch with family and friends through a social network, communicating via instant messaging sites with their friends and colleagues, take a ride in Uber and other ride sharing sites, etc.

That's become even more ubiquitous with the advent of mobile devices that are always online. Users don't need to get to a personal computer to the things they'd like to do online, they can just use their smartphones and other mobile devices (the smartwatch for example) to reach to the Internet and become "online" instantly. This trend of always ON makes the digital space such an appealing space for businesses to thrive. Online platforms like some of those mentioned above are just a few examples of how businesses, which had successfully captivated users by providing them with useful services in the online digital space, could have amassed a massive user base of millions of users worldwide. However, such a massive user base also brings technology hurdles and complexity to the online platforms that need to be tackled.

When it comes to investing their savings, modern retail investors still have very limited options at their disposal that are able to match their modern lifestyle. As digital savvy, always online kind of people that they are, they would like to: a) do their investments online, like they do with any other aspect in their lives; b) do it mobile, like they are used to for many other things too; c) do their investment decisions by themselves if sufficiently grounded information is provided; d) not rather pay for professionals who'll manage their savings on their behalf, unless they have no other choice.

Financial institutions have slowly been trying to catch up to the new kind of DIY investors (Do-it-Yourself) lifestyle with mixed success. While many funds and brokers are now online and allow fast investor enrollment into their financial services, many requiring just minimum account balances, there's still a management fee to be charged for the institution's financial services of course. Besides the issue of the management fee, which can greatly differ among investment institutions depending on whether the investments are actively managed or passive (ex: index investing), there's still the issue that DIY investors feel that they have little control on how their investments are being done on their behalf. They feel they must resign themselves into entrusting their savings to a few all-powerful portfolio managers and hope for the best and of course pay for their work.

The robo-advisor platforms, the new entrants on the retail investment scene are yet another attempt to meet the aspirations of the modern DIY investors. Such platforms offer to do all things online to its digital savvy customers, even through a mobile setting, while keeping management costs low due to widespread use of the robos: computer-aided processes that help automate many of the portfolio management tasks which were traditionally assigned to employees. Tasks like trading, periodical rebalance of accounts, investment orders generation and execution, among other tasks, is done mostly in a computer-automated way with minimum oversight.

The proposition these platforms sell to retail investors are: a) professional (automated) help at a low cost; b) customer can manage all things online, even through a mobile device; c) full transparency and instant access to his investment account: current balance, returns earned, fees paid, expected returns, and so on; d) sometimes also access to the particular investment decisions (orders to buy and sell assets) carried out by the robos are available. Some robo-advisors are tasked with only the sending of such investment orders to their retail customers and let the customers do the actual purchasing and selling of assets from their brokerage accounts, outside the robo-advisor platform. However in these cases there has to be some form of reconciliation to match the customer's actual portfolio with the one the platform manages for him virtually. Due to this complication and to the fact that management fees, however allegedly small, must be charged from the customer account in the platform, have made this robo-advisor type much less suited.

Traders on the other hand find their full time jobs as portfolio managers, whose task is to manage the funds from both institutional investors and retail investors inside financial institutions, such as: investment banks, mutual funds, hedge funds, brokerage firms, etc. Skillful and talented traders have an easy time finding employment in any of such firms, which in return pay them handsome salaries for their work.

Retail traders in contrast attempt to "make it" on their own outside any institution's envelope and resources, which are considerable: access to real time market data and financial information for a virtually unlimited amount of securities, both domestic and international; access to automated systems for supporting trading and investing activities; access to computerized systems to support portfolio management and risk; access to discussion forums and bulletins in which other institutional traders and financial analysts come together; to name just a few. Although online resources for accessing financial information and market data is getting a strong foothold in retail, these many websites still lack the breadth of computerized systems necessary to do a proper job for both retail traders and investors with respect to their investment decisions.

That said, it is still tough, even for the skillful trader, to compete in the financial markets outside a financial institution and its considerable assortment of resources. Let alone the retail investor. It's almost not fair.

What's missing is a true social network for the retail crowd. An online community bringing retails investors and retail traders together for mutual benefit. An online platform where retail traders can use their experience in the financial markets to devise trading algorithms that incarnate their unique vision and strategy, which the platform is happy to run in the live markets and for the benefit of the community. In exchange, the community offers compensation and recognition to the talented traders who serve them well. A collaborative community, rather than a competing one, that does not pit traders against one another in competitive rounds in the lookout for the best ones. That hardly coins the term "community" at all.

### Vantages of the invention

The present invention aims to bring together retail traders and investors into an online community, a social network for the retail crowd, called the Platform in the scope of this invention.

The aim of such a community is to unite the combined efforts of the retail crowd at large to be able to compete against the historical predominance of the financial institutions regarding how their investments are managed. With sufficient critical mass, let the well-established economics of supply and demand, of market auto-regulation, rule over this community of retail traders and investors without the need of any centralized decision body when it comes to investment decisions. That's in striking contrast to the norm financial institutions take, which is that the fund manager or the portfolio manager decides with almost absolute power what investment actions to take on behalf of the investors money.

The role of the platform is to provide the necessary infrastructure and the computing resources required to "host" such community of retail traders and investors and facilitating the access and interaction between its distributed user base, as well as providing the means to run the trading algorithms users (traders) submit for the good of the community.

Eyeing for a massive user base on a global scale, it naturally must streamline and simplify the overhead traditionally associated with the management of investment funds and portfolios from investors. Due to the decentralized nature it aims for, the platform purposefully removes the need for any portfolio management tasks at its core, and thus no management fees need to be charged. Even so, the platform still manages to generate revenue from its massive user base. More details ahead.

The platform facilitates and supports traders in the development and submission of their trading algorithms that it then runs against live market data in the hope these generate good investment opportunities for its subscribers in the form of trading alerts subscribers receive in real time.

The platform hosts and runs a variety of trading algorithms submitted from its user base of traders, to which retail investors and other traders in the community subscribe. In exchange, traders that developed the algorithms receive monetary compensation from the subscribers of their algorithms. The more users that subscribe to an algorithm, the more monetary compensation the trader who submitted it receive. Trading alerts that are generated by these trading algorithms are then sent to all subscribers as they occur in real time in the financial markets.

The users of the community still need to have balance accounts in banks and broker firms to issue actual orders into the market. The platform does not hold balance accounts of any kind from its users, and doesn't execute orders automatically from users either. The platform does not have the role of an online broker. And it's not a fund that manages savings from its investors. In fact it never deals with actual money from anyone, apart from what its users pay regularly (monthly fee, recurrent) for using the platform's services and any additional subscription fees algorithms charge to their subscribers.

Trading algorithms are run in real time "live" while the markets are open and prices move. Trading algorithms generate trading alerts at specific times during open market hours according to their programmed plan. Trading alerts are sent to subscribers in real time as market prices move. What users do with the alerts they get from the platform is entirely up to them. Since the platform does not hold any balance accounts nor issues any orders to be executed into the market on behalf of its users, each investor (or trader) is therefore responsible to pursue the necessary steps onwards. If a user would like to follow the alert's trading instructions to enter into a position or close one, he must go online at his bank's homebanking website and issue his investment order online, all by himself. His portfolio of open positions must be managed entirely by him, from his homebanking account, not by the platform. The platform's simple mission statement, through the trading algorithms that it hosts and runs, is to just give potentially good signals of entry and exit points in the financial market for a number of securities it supports. What users would or wouldn't do with having such trading alerts, is completely outside the scope of the platform or its mission.

Trading algorithms are therefore the very important assets of the community. They are also part of the present invention. They are designed in a sort of "lingua franca" inside the community that the platform understands and executes and every user can reason about. A more thorough description of them is presented later in the invention. Knowledgeable and algorithmic-proficient members of the community are able to design and submit their trading algorithms into the platform using such lingua franca, if they know the rules and the language trading algorithms are made of. Trading algorithms they spent time conceptualizing and conceiving on their own. The platform is able to assist them by providing a means to backtest the algorithm they've just designed against past historical data from the markets. That serves twofold: to prove the conceptualized algorithm works as expected, according to the recent market conditions, and to evaluate its performance before it goes "live". Trading algorithms are constantly being monitored and rated by the platform based on their performance on the financial markets as soon as they go "live". Performance against historical data as well as against current data is to be continuously evaluated by the platform, so the members of the community know how each one performs. There's always a risk that markets shift all of a sudden and one given algorithm, which had been giving positive returns in the past, fails to send good trading signals. That's the fleeting nature of the markets. There's nothing that can be done about that. One has to accept it and move on. But no worries here, because trading algorithms that turn sour all of a sudden will pretty soon be put out of business, as subscribed members start to flee it based on poor recent performance. Community members can subscribe to one or more of the available trading algorithms the platform advertises based on how they have been performing lately as well as their trading objectives and style. Trading algorithms can be designed to target specific market exchanges and securities, such as Euronext stocks for example or only Forex. Members would subscribe to such algorithms only if they feel confortable trading such financial instruments. That also depends largely on what their banks or broker firms allow them to trade and for which markets. If the bank the retail trader works with doesn't allow him to trade the Forex market for example or charges heavy commissions to trade in those markets, he wouldn't subscribe to an algorithm that had been specifically designed with the Forex market in mind.
It's important to emphasize again that the platform, particularly the trading algorithms that it hosts and runs, will be just sending buy and sell alerts to its subscribers. It is up for each subscriber, i.e. the user of the community who subscribed to the trading algorithm, to follow or not follow (ignore) the algorithm's trading alerts. If a subscriber decides to follow that alert and buys a certain amount of shares from a certain stock, as instructed, he will be doing it by himself, on his own risk and money. He still needs to contact his bank or broker firm and issue the market order online. The platform won't do that for him automatically. The trading algorithm will send him a corresponding signal to sell those shares at the appropriate time too, hopefully. If one decides to skip the trading alert completely, he would also have to disregard any sell alert afterwards, since he didn't enter in the position in the first place.

### Brief description of the invention

In the preferred embodiment, the community-based platform for retail investors and traders is a computer system running on servers and reachable through the Internet. To scale globally, the platform is split into separate timezones by following the regions where cloud-computing resources and datacenters are located. Cloud providers can be the Amazon Web Services (AWS) or Microsoft Azure, among others that have worldwide reach.

Such separate "deployments" are hosted on specific regions in the cloud-computing space and are more or less autonomous to one another. That is, the platform is architected in such a way that deployments hardly need to share and replicate data between each other unless for some special cases detailed later in the description. This approach greatly simplifies covering a massive user base as opposed to traditional centralized systems where more and more servers need to be added to an overloaded computer system or overloaded computer farm centralized in one location. But adding more and more servers per se won't help the scalability problem if resources aren't spread over those additional servers in the right manner. Resources then need to be adequately spread over the additional servers concerning things like: storage, computing instances, memory, and other computer resources. This alone makes the system as a whole overly complex because software mechanisms like load balancers, message queues, caching, distributed business objects and so on need to be now part of the system where they probably didn't exist to begin with if user base was relatively smaller. Even with all such measures in place, a centralized computer system can never be as responsive as a geographically distributed one because of latency: an american customer have a much more gratifying user experience (website or app seems to be more responsive) when using a US-based platform than a chinese customer using it from overseas.

The approach the preferred embodiment of this invention takes on having separate deployments in order to scale not only improves the user experience of its "local" users but also greatly simplifies the software architecture of the platform by not having to re-architect the system in order to grow.

It all makes sense, because users from a timezone (ex: Europe) would preferably be involved with securities from the same timezone (ex: European stocks) because the platform sends alerts in real time and that's when the local exchanges are opened and actively trading its own securities. Platform also forces trading algorithms to target securities from a single timezone. So one deployment (Europe deployment) would have only to manage its securities, its European users, positions from those users, and running algorithms for those securities. A China deployment would manage resources for its chinese customers and chinese securities and algorithms that target those. That is not to say a user can't be involved in two or more timezones. What happens is that he would get alerts probably deep in the night or in very early morning (due to different timezones!) for securities traded in exchanges overseas. Platform must ensure that only certain data (from those especial users, from "exported" algorithms into other timezones) be replicated and synced between deployments. But that's limited to specific set of data to cover those special cases that crossover timezones. Crossing-over to other timezones increases fees to users. That's hardly as complex as adding more servers into a centralized system to combat overload because of the increased software complexity this approach would bring.

Apart from the server-side aspect of the embodiment that's realized by the platform, the client-side aspect of the preferred embodiment is realized by a smartphone App in typical form. In other embodiments, alternatives for the client-side such as non-limiting a personal computer, although possible, have less advantage when taking mobility and billing factors into account. The required functionality of the App is very straightforward: (a) the App allows a user to register and login into the platform; (b) see the platform's contents and its main activities; and (c) subscribe to trading algorithms it advertises. When one algorithm generates a trading alert, either to buy or sell some security with a given target price "at this time", all its subscribed members will get an alert on their smartphones via a technology called push-notification. This is a known framework Apps use to get notified of something happening in real time from a server-side application running on the back- end. In a very basic analogy, it very much behaves like a SMS. A smartphone App is the preferred embodiment to act as the client side, since due to its mobile nature it allows the user to receive an alert at any time during open market hours. User needs to react to the alert when it happens "now", rather than at later point in time. Moreover, if the financial market in question is overseas, then alerts might come late at night too!

But also because of billing: smartphone Apps support a technology called in-app purchases or in-app subscriptions. That simply means members can renew their subscription fees to the platform every month with just a touch of a button right inside their smartphones and don't need to make explicit money transfers by other means. Money is withdrawn from their Apple resp. Google accounts automatically and effortlessly via the so-called in-app purchases or in-app subscriptions. Recent technology such as Apple Pay or Android Pay makes this process even more reliable and cost-effective. As users subscribe to different algorithms and unsubscribe to others or begin to use oversea deployments, the in-app subscription rate changes accordingly to mirror the new fee structure the user incurs in the platform in the next charging period. That happens quite effortlessly from the user's point of view, as said: no money transfers need to take place.

When it comes to designing trading algorithms though, smartphones aren't ideal because of their small screen real estate. Tablets and laptops are then the preferred devices to do such a thing. Being mobile though is very important because of the nature of the financial markets. Financial prices move a lot, especially when reaching some extreme price levels (where good trades can often present themselves!). At such levels, as it occurs when prices break resistance or support lines for example, prices don't hang on for long in that vicinity. They often rise or drop sharply and move away from that price level very dramatically. That is why it is very important to catch the price move on the right time without delaying too much before it gets too far away from the target price of a good trade.

The server-side embodiment, called the platform for short, is the heart of the community-based system. The platform in each of its various deployments run computer programs that manage all aspects of the "local" online community, such as, non-limiting: (a) user registration; (b) user account and privileges; (c) virtual positions from users and groups, open and closed; (d) group accounts; (e) billing and fees, (f) trading algorithms that are live and advertised to the community at large; (g) trading algorithms submitted for backtest; (h) keeping track of each algorithm's performance; (i) user subscription to trading algorithms; (j) user membership to groups.

The single most important task of the platform is to run its trading algorithms. The complete set of algorithms from one timezone are run live by one or more computing instances (servers) on the deployment affected to that timezone for as long as exchanges in that timezone are open. Note that algorithms target securities from a single timezone, hence they are run by servers in the resp. deployment that also serve securities that are traded on the same timezone. Ex: the Europe deployment runs all algorithms that target European securities, namely European stocks, for the entire duration that its market exchanges remain open. In Europe financial markets have been harmonized, which means markets open at 0800 UTC and close at around 1640 UTC in all countries.

Servers must run all advertised trading algorithms simultaneously. The more trading algorithms a certain deployment hosts "live", the more computer resources are needed to run them all. In a second embodiment, platform can split computing resources not only into separate timezones but also into separate security classes inside one timezone. Ex: the Europe deployment can be further split into two or more separate deployments for scalability reasons, with each deployment in charge of one security class within that timezone. Ex: Europe deployment is now spread over into three separate deployments: the European Stocks deployment (equity asset class), the European Bonds deployment (fixed-income asset class), the European Commodities deployment (commodities asset class). Further note that platform forces algorithms to target a single asset class on a single timezone. Ex: trading algorithm may target European stocks, all that are supported in the timezone (doesn't mean all stocks!) or a subset, but can't target European bonds at the same time. A different algorithm specifically targeting European bonds must be devised and run in the Europe deployment resp. European Bonds deployment.

Outside market hours, deployment may also run trading algorithms for backtest.

Real time financial data from each security, sampled at periodic intervals, is fed onto each algorithm and platform servers run the algorithm with that financial data as input. Algorithms target specific types of financial instruments (for example Euronext stocks) and keep clear from other instruments (stocks in the Nasdaq for example). Not only because the platform enforces it but because they were specifically designed, optimized and backtested against such specific types of financial instruments and remained basically untested for others. The platform supports a given set of securities that are traded in the financial markets the platform covers in a certain timezone. Not all securities in those markets need to be supported. The mapping of securities to an algorithm must be configured at the server level - one of the many duties the staff working for the platform must execute. That's negotiated between the trader who submits the algorithm and the staff: it is unreasonable for an algorithm to target just a few securities, like it is probably unrealistic to target all supported securities from a timezone (means the full set of securities possible which covers all market exchanges in the timezone). It's reasonable for algorithms to target either all securities from one or more indexes (say PSI20 and IBEX indexes) or all securities from a given sector or sectors (say stocks from the utilities and energy sectors in Europe). Regardless whether some of the securities are or not target of algorithms, all securities the platform decides to support in the timezone need to be captured. Ex: say all securities from the stoxx600 have to be supported in the Europe timezone by principle, no matter if some of them aren't currently target of algorithms running in the timezone, for instance from the greek index. Security capture happens in real time from the markets where it is traded and it's additionally stored inside platform's servers to serve as historic data for backtests and for calculating various technical indicators. Captured financial data from securities is fed to the running algorithms that target them in real time. Technical indicators used in trading algorithms often need several past days of historical prices to function properly. For instance, a 50-day moving average of a security would need the last fifty days of the security closing prices for it to work at all.

Running backtests is not that much different from running trading algorithms "live" with real time market data. The only difference is that backtests will be feeding historical data to trading algorithms instead instead of live data. The algorithm's execution plan must behave the same way with historical data as with live data, only the trading signals it generates are just not sent to anyone. Running backtests with historical data serve to test an algorithm's design plan and to check its performance before putting it live against actual financial markets. The good signals vs. bad trading signals the algorithm gives out can therefore be measured during backtest, once positions close, and the rate at which signals are generated can also be measured. Trading algorithms performing well over recent historical data and behaving with "good" manners with respect to their signal output rate, are promoted to "live" and advertised to the whole community.

Each trading algorithm has a set of properties like: a name - which identifies it uniquely in the whole platform (ex: "GAPNGO" could be a name of a trading algorithm; it reads: Gap 'n Go); a brief description what it does and what's the design plan; the planned holding period of positions (i.e. how long in average a position remains open by the algorithm), the measured signal output rate (how frequently signals are sent as measured both in backtests and in live); the measured performance (both in backtests and live- this is constantly being tracked by the platform); the user who designed it; range of securities it targets; some dates - submission date, backtest date, number of revisions, date when it went live, number of current subscribers, and any other relevant bookkeeping data worth presenting.

When trading signals occur as part of a running trading algorithm that is "live", the platform generates alerts, or more technically, push-notifications, for all its subscribed members. A tracking piece of software monitors all signals generated by each of the trading algorithms that are running live, even if these have no subscribed members at the moment (hence, alerts are actually sent to no one, although these continue to be signaled as part of the algorithm design). Signals to enter a position are matched against signals to exit the same position later on (which can be hours, or days or weeks later). When a matching position is found and thus an open position is closed, the profit vs. loss (a positive percentage of how much was the profit or a negative percentage of how bad was the loss) is calculated and the trading algorithm is rated. Each trading algorithm is then assigned a performance rating automatically based on each individual profit/loss it fared along the weeks or months it has been running. The performance rating in one embodiment comprises the complete set of each individual trade's profit/loss made so far and a final rating computed over all such trades that yields a total positive or negative return. In other embodiment, only the final rating is available. Its performance rating is made publicly available to the community, so users can assess and draw conclusions by themselves on how the trading algorithm is performing. Performance is calculated separately in the backtest phase and in the live market. In one embodiment, different revisions of one algorithm are rated for performance separately and a final rating summing all revisions might also be made available. Revisions that go in backtest first and then brought to the live market get a separate performance rating too at each phase.

All data made publicly available from trading algorithms in the platform is fully accessible to all community members. That includes the various performance ratings the algorithm has attained so far in the several revisions and phases. While the trading algorithms runs in the live market, all its trades and its profit/loss ratio per trade and final rating become publicly known to all the community. Users can decide then with knowledge and with a degree of confidence to which trading algorithm to subscribe, not only based on its attained performance but also its advertised trading design plan and trading style as well as things like planned (or measured) signal output rate and planned (or measured) holding period of positions. That decision may also be partially driven by other users in the community. Users may have felt the algorithm under-performed (or exceeded his expectations and did better than anticipated!) and have posted comments in one of the platform's forums to let the rest of the community know about it and how they think it fared.
Users are free to subscribe to any of the trading algorithms the platform advertises and makes public, and are also free to unsubscribe to any of them if they cease to have interest. Unsubscribing to a trading algorithm means to no longer be receiving alerts from it, which is often what the user wants.

Users can be active members in the community and micro-manage their own subscriptions and stay attentive to any news in forums for example, such as when new algorithms make their public appearance, when new securities begin to be supported or the target of algorithms, when algorithm's performance get updated or when reviews from other users are posted, etc. Alternatively, users could be more passive, if they can't afford the time to spend on such activities, and may very well be joining a "Group" instead. Groups, in other embodiments called "Syndicates", are completely free to join/leave to for any user of the community.

Groups are formed by users of the community that share similar traits in their investment styles and share a similar cost structure and risks in their investments. Groups then act as one user body inside the platform, with one account, one profile, very much like with any user. From a pure software perspective, a group is just like any other user of the platform but one having multiple smartphones! Like normal users, groups can subscribe or unsubscribe to trading algorithms and have their own account and financial profile in the platform. The group's profile defines the cost structure associated to the group (described later in the invention). Groups can't join other groups however (theoretically they could, but I don't see the purpose of doing that in the scope of this invention).

A group is led by a group leader. That's normally a user who is more experienced retail trader or investor and one the rest of the group members identify with and trust. The group leader takes responsibility in subscribing and unsubscribing to the trading algorithms he thinks fit the group's investment style and thinks are the best, on behalf of the group members. He's a kind of a representative of the group in such endeavors in the platform. He'd be keeping a watchful eye on the latest algorithm performance ratings, and switch trading algorithms if necessary for the entire group to benefit. In a second embodiment, the group leader takes a majority vote before taking any such actions on behalf of its members. In yet other embodiment, the group defines a set of regulations to rule the scope of action the group leader take on behalf of its members. Note however that such set of regulations, which is basically a formal or informal contract agreement between its members, should not be meant as a means to be enforced by software in the general embodiment. In yet other embodiment, group regulations could be expressed in a formal language (in XML for example) that can be parsed by a server and to be understood by the platform as rules to enforce all or at least some of those regulations, in this way ruling and limiting the power of the group leader. In any case, group members are free to leave the group anytime they want.

When trading signals happen and the group gets an alert, the platform itself sends alerts to all individual members of the group without the need for the group leader to do anything (like informing its members). Thus, each and every group member will get an alert in his smartphone or mobile device. Groups are actually encouraged by the platform because they impose less computer resources and add an important scalability measure to the system. As one non-limiting example: just one computing instance, called a Sim (to be described later), is able to run an algorithm for the entire group, whereas individual subscribers (users) get one Sim each. More details on that later.

One of the few delicate tasks the group leader would have upon his shoulders is to "nurture" trading algorithms he subscribed that happen to be familiar to him. In some cases, he might have submitted the algorithm himself! Group leaders can be seasoned retail traders. In the preferred embodiment, "nurturing" is only possible to do from expert users. That is, from recognized seasoned retail traders from the community.
As part of the design of a trading algorithm is its ability to accept educated guesses from external sources (i.e. from people, a human touch). In the context of this invention, they are named "hunches". Hunches are totally optional in the design plan of an algorithm, and are even discouraged to a large extent because algorithms cease to be mechanical and deterministic when hunches are supported. However, if put to work as part of the design, the algorithm while running can adjust its execution flow slightly by taking into account the hunches that are fed to it. Only expert members can send hunches. That includes the user (a trader) who designed the trading algorithm. In the preferred embodiment, expert users give their hunches directly from their smartphones or mobile devices, when they feel the time is about right. Algorithms should run entirely by themselves and perform fairly well in the markets without hunches being handed over to them. Also in backtests, no hunches can be fed to algorithms. For example, instead of giving a sell signal in accordance to its original design plan, that is, when the price level reaches the closest resistance line as defined by the algorithm, with a recent hunch being handed over to the algorithm, it decides to wait for the next higher resistance line instead, skipping the first sell signal and waiting for the higher price level to only then send the sell signal.
Of course, such hunches must be part of the algorithm's design plan to begin with. Much more usually though, a trading algorithm is designed having just mechanical and technical analysis in mind, and offers no room for chance or guesswork to come about. However, it could be designed taking a more "flexible" character, by making room for hunches to be given to it from external sources (so-called human factor). The effect being the algorithm modifies slightly its normal entry and exit points in an attempt for a better return. Hunches should be very limited in scope and should not modify or break away an algorithm's original design. The platform staff should assist users in that respect and enforce strict rules on the widespread use of hunches.

The heart of the platform is managing and running trading algorithms. That's the main reason users would happily pay a monthly subscription fee to use the platform. More than being just simply a social network for retail investors and traders per se without any real added value. The revenue stream of this business comes of course from the subscription fees user pay regularly and any extra fees users pay to enter in additional timezones (gives them access to foreign markets). In addition, users who would like to use algorithms that have a rated subscription fee associated must pay that rated fee regularly for as long as they use it. The collected payments from all subscribers go to the trader who designed the algorithm and a cut goes to the platform.

But the platform is still in fact a social network for retail investors and traders nonetheless. Therefore it is more than natural to add a number of "social" functionalities to it, like it is the norm in any noteworthy social network these days. In one embodiment the platform may offer exemplary things like: (a) discussion forums, (b) news, (c) periodic newsletters, (d) blogging, (e) live instant messaging and chat, (f) hosting personal pages and group pages whose content is administered by users resp. groups in order to advertise the services of a retail trader or to publish the group's mission and regulations as a non-limiting example, and much more.

### Brief description of the drawings

For an improved understanding of the invention, drawings are enclosed hereto, which illustrate preferential embodiments of the invention not aiming however to limit the scope of the present invention.
FIG. 1: Functional block diagram of the community-based platform shown split into different timezones, called deployments in the scope of this invention, for reasons of scale.
FIG. 2: Functional block diagram showing one embodiment in which one timezone is further split into distinct deployments based on security class, again for reasons of scale.
FIG. 3: Flowchart diagram showing the platform split view into the various logical components.
FIG. 4: Block diagram showing the atomic function arrangement of a exemplary trading algorithm, in which branch lines fork from the main sequence line.
FIG. 5: Block diagram showing a more elaborate example of a trading algorithm that has more than one main line sequence of atomic functions and multiple nested branch lines that fork from a parent line.
FIG. 6: Fully working trading algorithm in XML with comments. It is split in two parts: FIG. 6A and FIG. 6B.
FIG. 7: Block diagram showing the corresponding atomic function arrangement of the algorithm from FIG. 6.

### Detailed description of the invention

The following disclosure presents and describes the preferential embodiments of the invention with sufficient details to enable the skilled person in the art to execute the invention.

The following detailed description is presented for purposes of illustration only and its does not constitute a limitation of the scope of the invention, which is determined by the enclosed claims.

This invention is described herein in a schematic way and with reference to the enclosed drawings.

### DEFINITIONS:

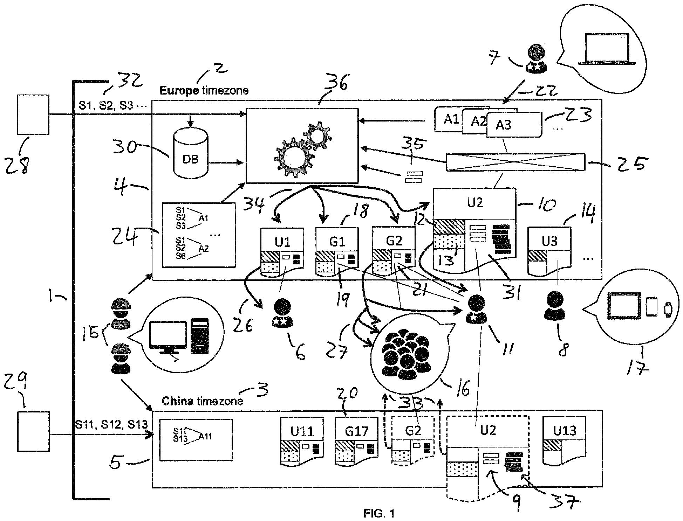

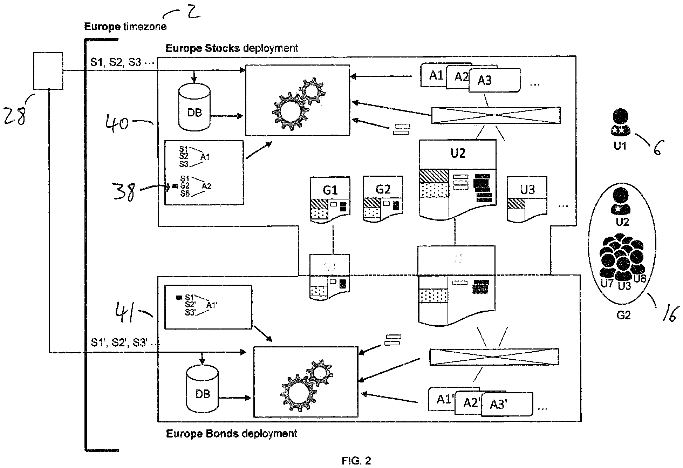

As used in the present invention, the terms and concepts set forth below have the following meaning, with reference to FIG. 1 mainly but also FIG. 2:
▪ Security (32) - can either be a stock, index, currency pair (Forex market), commodity (oil, gold), ETF (exchange-traded fund), bond or other securitized financial instrument. Securities can belong to different asset classes, such as those just mentioned.
▪ Market - The exchange where securities are traded. People engage in markets to buy and sell securities. Markets are naturally divided into timezones in the world, separated roughly by the time (UTC) in which they open and close for trading. One or more markets may belong to the same "timezone", like for instance the European stock markets (2). The US markets would belong to a different timezone different to Europe, like the chinese markets (3). The general idea here is to split platform resources (computing instances, algorithms, users, etc) in order to address each major economic zone separately and thus to scale in this fashion. It's not just a matter of splitting resources and scaling but also to serving the users on each timezone appropriately since the platform would be sending real-time alerts in each timezone at quite different UTC times around the world.
▪ Trader - Someone who trades regularly in the financial markets. There are the professional traders and the retail traders (6) and (7). The latter type is what this invention is more concerned.
▪ Investor (8) - Like traders but means the general public (retail investors) or institutions that invest their savings in the financial markets looking for positive returns. Often times ask for professional help in their investment decisions or deposit savings to be managed entirely by professionals in the business. Modern retail investors enjoy being the DIY (Do-It-Yourself) kind.
▪ Position (9) - A stake an investor or trader has in a security. He enters into a position by purchasing a certain amount of shares (or contracts) on a security. When in an open position, as the security price moves up or down in the market, his position yields a positive or negative return. When he exits the position (by selling the shares or contracts) the trade is complete and the trade's return is finally known. Position may be held almost indefinitely. Though for some securities, a holding fee may be charged by the bank.
▪ Position size - The amount of shares or contracts in a position. The higher the amount, the higher the position size and consequently the higher the exposure to that security. Security's price changes lead to greater profits but also to greater losses for a trader. Experienced traders manage risk by carefully increasing or decreasing their position sizes and therefore their exposure to that security.
▪ Cost - The amount of money a trader needs to pay his bank for a financial transaction in the markets. The cost varies from bank to bank but normally the higher the position size the higher the cost. Costs must be paid to both enter and exit positions. Typically the cost gets diluted in the position's final price. Example: a trader acquires a position of a security at a price of 23.12; the bank applies the associated cost of +0.25% (that would actually depend on the position size) to the position's final price, so that would make the price read 23.18 instead of 23.12 in his portfolio of assets. To make a profitable trade he needs to sell the position at a price higher than 23.18.
▪ Profit - A trade whose return was positive. It means the position was sold at a higher price than it was bought plus any associated costs such as commissions. Investor's account balance grows with each profitable trade.
▪ Loss - A trade whose return was negative. It means the position was sold at a lower price than it was bought plus associated costs. Investor's account balance shrinks with each loss.
▪ Stoploss - Limits the loss of an open position. Position is exited automatically (at a predefined loss) once the security's price hits the stoploss limit.
▪ Takeprofit - Fixes the profit of an open position. Position is exited automatically (at a predefined profit) once the security's price hits the takeprofit limit.
▪ Liquidity - The level of trading activity of a security. The higher the security's liquidity the easier and quicker it is for a trader to enter and exit trades without affecting the security's price much. Traders like highly traded (liquid) securities.
▪ Volatility - The degree of price movement of a security in short periods of time. High volatile securities move widely in price in relative short periods of time. Open positions on highly volatile securities can experience bursts of high profits and of high losses alike. Traders like less volatile securities.
▪ Platform (1) - The community-based space in the Internet where retail investors and traders sign up, get involved and meet. Platform charges a flat recurrent subscription fee (ex: monthly) to its users.
   In the preferred embodiment the platform consists of infrastructure and servers running in the cloud that is conveniently distributed into one ore more separate deployments (4) and (5), while replicating the same basic architecture (4) in each deployment. Such separate and autonomous deployments is a means not only to scale the platform to a global scale, by growing into more markets abroad on different "timezones" through deployments, but also to better address its local users and "local" markets in that timezone (2) and (3) due to latency and other factors (language, currency, compliance).
   For the particular cases where some of the users and groups "cross-over" to other deployments, there must be replication and sync mechanisms in place (33) that ensures user and group accounts between deployments become eventually sync'ed. Note however that only the personal details (name, alias, deviceId, etc) of an account (10) need to stay in sync between the master and slave deployments since the remaining account data such as the financial profile and the virtual portfolio attached to the account are specific for each deployment (33). See the meaning of Financial Profile and Virtual Portfolio in the next lines.
   In a second embodiment, more than one deployment exists in a timezone. Deployments in this case are split by security class (40) and (41) in one timezone. Deployments manage an infrastructure replica in all identical to a regular deployment of one timezone (4), but this time applicable to securities of a same asset class in that timezone. In the example of FIG. 2 a deployment manages European stocks (40) and a second deployment manages European bonds (41). Each such deployment holds data and computing instances to address all what is concerned with those securities, including running algorithms that target these and managing accounts and positions that deal with that asset class. In this particular embodiment user and group accounts are shared since the two deployments belong in the same timezone where databases and storage in general can be easily shared in the cloud.
▪ Deployment (4) and (5) - a "replica" from the platform that runs autonomously in one region or timezone in the world. In the preferred embodiment it comprises the infrastructure and servers running in the cloud to completely realize the demands of the server-side aspect of this invention in that region. Holds user accounts, databases, trading algorithms, configuration files and all the data that's required to fulfill the present invention in its various embodiments in the resp. timezone. Runs the trading algorithms for that timezone.
▪ User (11) - Any registered member and thus a customer of the platform. He's given a user account (10) in the platform in the timezone he naturally resides (ex: European user signs up and registers in the Europe timezone) . User account holds any relevant personal data (12) from the user, like but non-limiting to: name, address, country, phone number, identity number, and privileges. He's assigned an "alias" - an id, which must be unique in the entire platform (unique in all deployments) and associate one or more deviceIds to his account. The deviceId is the all-important piece of information that allows the platform to deliver real time push-notifications (alerts) to his mobile device. User account holds besides the personal data (12) other data as well: a financial profile (13) and a virtual portfolio (13) for the user. In one embodiment, accounts of unprivileged users (14) don't hold any financial profiles nor virtual portfolios. More details ahead.
▪ Privileges - User privileges range from Standard, Premium or Expert. A Premium or an Expert user makes him a privileged user as opposed to a standard user. The platform staff (15) assigns user's privileges based on experience and seniority. In the preferred embodiment privileged users (11) and (6) can subscribe/unsubscribe to trading algorithms and join/leave groups freely. User typically interacts with the platform through a smartphone App or tablet (17) or any other suitable mobile device.
▪ Group (16) - Gathers one or more users who become its group members. Led by a privileged user (11) who sets up the group and becomes the group leader. The group leader takes charge of all the group activities in the platform, like subscribing/unsubscribing to trading algorithms on behalf of all members. From the platform's perspective a group is just like a user but one who happens to have multiple mobile devices! Users (8) can join and leave groups. For the sake of simplicity, groups can't join other groups. Platform keeps a group account (18) for each group with details such as name, alias, mission, current members and all collected deviceIds from members. The alias or id for the group must also be unique in the whole platform. In addition to the group detailed information, group account holds also its specific financial profile and a portfolio of virtual positions (19). See Virtual Position further ahead.
▪ Standard user (8) - user with the least privilege in the platform. Many retail investors fall in this category. In one embodiment, standard user cannot subscribe to trading algorithms unlike privileged users. They must join a group instead. Can join a single group one at a time. In a second embodiment the standard user can join a single group per deployment. In the example of FIG. 1, standard user (8) would be able to join group G1 (18) and group G17 (20) since these groups lie on different timezones/deployments.
▪ Premium user (11) - a privileged user with some experience. Can be an outright DIY investor or a retail trader typically. Can subscribe and unsubscribe to trading algorithms at will and join/leave groups as desired. Can setup a new group (16) and become its group leader. Group leader can assign another privileged user (6) as substitute to act as group leader on his behalf. Platform keeps a portfolio of virtual positions (14) for each privileged user.
   Notice at this point that if a privileged user joins one or more groups he'll end up holding two ore more portfolios in the platform: one for himself (31), one for each group he joins (19) and (21). Open positions in each of the portfolios he "holds" in such a way are independent to one another. That means one or more alerts may be sent towards that user's mobile device (smartphone or tablet or any other mobile apparel) on a same security, but each alert is coming from a different subscriber that he nevertheless is part of. Privileged user (11) onto multiple groups has to discern what alert is telling him what about what position he holds. See Virtual Position further ahead.
▪ Expert user (7) - highest ranked privileged user and typically a retail trader with experience in the platform. Holds the same privileges as the premium user. In addition can submit new trading algorithms (22) or new revisions thus becoming the owner of a trading algorithm he submitted. Can feed hunching data to trading algorithms. See Hunching Data further ahead.
▪ Owner (7) - expert user who submitted (22) a trading algorithm he has designed. May charge a subscription fee or a flat entrance fee for subscribers to his trading algorithm. Platform takes the charged fees from the subscribers, takes a cut and gives the remainder to the owner.
▪ Trading Algorithm (23) - The lingua franca of this entire community, the pillars onto which the community and the platform stand. In this embodiment, a trading algorithm is expressed in the XML language with a unique set of rules and keywords that enable it to deal with real time financial data from multiple securities (see Target Securities below) in a intelligent and comprehensive way that work for both humans and computers. In a more technical note, a trading algorithm is divided in two parts: the "entry" part of the algorithm (entry algorithm) and the "exit" part (exit algorithm). Both must coordinate to yield profitable trades. The "entry" algorithm generates signals to enter in a trade or position. The "exit" algorithm generates signals to exit an open position. Trading algorithms have a life cycle of their own:
   o Born - when submitted as a new trading algorithm to the platform. Expert users can submit new algorithms for a given set of target securities of their own design. A user who submits a trading algorithm becomes its owner.
   ∘ Probation - when submitted to backtests. Any trading algorithm that's submitted needs to undergo a backtesting phase against historical data over the target securities to assess viability and performance. Backtests are done offline after markets close, rather than live to not compete for server resources. At the end of this phase, the trading algorithm gets a final performance rating, i.e. how it performed against historical data. Good performers move on to the next phase. In some embodiments, a trading algorithm goes to the Live phase as part of probation still in a first step, to be tested against actual market conditions for a predefined period of time (say three months) before anyone subscribes. This procedure, triggered by staff when doubts arise, acts as a deterrent against algorithms specifically designed to overfit historical price data.
   ∘ Live - when it's running with live market financial data from the securities it targets. Platform advertises any new trading algorithm ready to go "live" and describes what's the underlying trading strategy devised and other relevant properties. Privileged users and groups may start subscribing to the newly advertised trading algorithm if appealing. Trading algorithms that perform well tend to have a large number of subscribers. Once they start losing their grip with the market and becoming out of tune (due to the very nature of the financial markets) subscribers begin to leave. When no subscribers are left, it's maybe a symptom the trading algorithm needs to be withdrawn from active duty. As long as a trading algorithm is live though, it will continuously be tracked by the platform about how it is performing against the live markets.
   o Deprecated - when the platform drops the trading algorithm from "live" mode. Should not have any subscribers left. The trading algorithm is archived rather than simply deleted. Its past glory days can still be consulted for statistics or whatever. Its former owner or the platform staff may ask for it to be reinstated again, from time to time when appropriate.
▪ Target Securities (24) - set of securities a trading algorithm targets and from which trading signals may originate. All such securities being targets to a trading algorithm must belong to the same asset class and must be traded in markets of the same timezone. That in turn makes trading algorithms both asset class and timezone-specific. For example: a trading algorithm is fine when devised to target stocks (one asset class) from the Euronext and DAX markets (same timezone).
▪ Subscriber - a privileged user or group that subscribes to a trading algorithm. Platform maintains the mapping between algorithms and its subscribers in one or more data tables (25) in each separate deployment. Trading signals for individual subscribers reach the user's mobile device in the form of alerts (26). Trading signals for a subscriber that happens to be a group are broadcast to every group member as alerts (27).
▪ Sim - A computing instance that runs a trading algorithm against one specific security. Despite the name and for those who are skilled in the computer science, it doesn't mean Sim needs to be realized as a process or as a thread running in a computer or server. It just means it is a software instance, in whichever form, that's capable of maintaining its state and executing periodically a trading algorithm. Sim lives with other Sims in the trading engine module (36) on each deployment. This module is in charge of assembling all needed data from the various sources of the deployment infrastructure: trading algorithms (23), subscriber mappings (25), securities sampled data (32) and from storage (30), configuration files that associate algorithm to its target securities (24), open positions (35) in the deployment. This module instantiates Sims as needed to run the trading algorithms in the deployment that are scheduled for live mode.
   There will be one Sim per security a trading algorithm targets. Example: if a trading algorithm targets one hundred securities then there will be one hundred running instances called Sims, each dedicated to a single security. A Sim is created anew when a new day begins and it's deleted when the day closes. For trading algorithms in live mode, the day begins when the market exchange where the security is traded opens and the day closes when that market closes. Example: European stock markets open at 0800 UTC and close at around 1630. US exchanges open at 1430 UTC and close at 2100 (daylight saving time not considered). So Sims that run a trading algorithm that targets US stocks would be created at 1430 UTC each working day and deleted at around 2100 UTC afterwards. Trading algorithms target securities that share the same market hours. For Trading algorithms in backtest though, each daily run recreates a Sim, which would get deleted when all the records for that day have been exhausted. Once created and initialized, a Sim holds its internal state (counters, flags, state transitions, etc.) for the entire course of the day until deleted at day close. In-between, a Sim is fed with daily records of the sampled security's data in real time when in live mode (or retrieved from storage in backtest mode). One Sim runs the "entry" part of a Trading Algorithm against one particular security. Another Sim is created to run the "exit" part of a trading algorithm for each open position that was entered by a subscriber. See Virtual Position further ahead. All those Sim instances may run separately to one another and in parallel to one another on the servers. They keep their internals separate but specific data (global variables) can be shared between Sims.
▪ Financial Data Sample - A snapshot of a security's financial data at a given date & time as retrieved from the market. All supported securities (32) are sampled from the market at a fixed sampling rate in real time, or with a small delay (typically 15min), if real time isn't at all possible or the cost for getting real-time data from the market provider (28) is prohibitive. In one embodiment, platform might support different market data providers (28) and (29) separate per timezone. In a second embodiment a single market provider could be enough to cover all the securities for all the timezones. Platform servers capture a sample of each security (32) at regular intervals from when the market opens until it closes for the day. Sample is translated into a financial record that is indexed by the keys: (security, date, time). Records are stored persistently on servers of the platform and are retrievable at anytime from database (30) or filesystem. Example: to access daily records of a given "security" (as identified by its ISIN for instance) on a certain "date", an application needs to retrieve all ("security", "date", _) records from storage (30). A record contains the following financial data (depends of the security's asset class, this one here is for stocks): [price, open, close, high, low, volume]. In detail:
   o price - the face-value of the security at this date & time. Meaning, at the time the security was sampled from the market exchange. Price may change up and down during the course of the day.
   ∘ open - the price of the security at the time the market opened for the day. Won't change during the course of the day.
   ∘ close - the price of the security at the time the market closed the "previous" day. Won't change during the course of the day either. Often in the stock market the open price differs from the close price of the previous session due to buying or selling pressure in off-market hours. When that happens, a gap up or a gap down is said to occur.
   ∘ high - the absolute maximum price of the security attained so far in the day. Moves up during the course of the day. At market close, the "high" gives the highest price of the day.
   ∘ low - the absolute minimum price of the security attained so far in the day. Moves down during the course of the day. At market close, the "low" gives the lowest price of the day.
   ∘ volume - the number of shares (or contracts) of the security that have been traded so far in the day. Moves up during the day.
▪ Trading Signal (34) - The eventual result of a [security, date, time] run from a Sim. Sims that run a trading algorithm for one dedicated security are fed with that security's financial data samples during the course of the day in a timely sequence. Each sample or record is indexed by [security, date, time] keys and contains [price, open, close, high, low, volume] values. Sim executes the trading algorithm part (either the entry part or the exit part) for each security record that is fed to it. At the end of each [security, date, time] run the Sim either generates a trading signal or generates nothing. Well-behaved trading algorithms, with good signaling output behavior, make Sims generate nothing 99.9% of the time! If the Sim is running the entry part of a Trading Algorithm, the trading signals it generates are to enter into a position over that security. If the Sim is running the exit part of a trading algorithm for a dedicated position, the trading signals it generates is to exit that position. For example: there's one trading algorithm that targets European stocks on the long side. The "IBE" Spanish stock (Iberdrola) in particular is run by a dedicated Sim for the entry algorithm's part. When that Sim generates a trading signal at the end of the [IBE, 20150513, 1245] run, the signal is to enter into a long position on that IBE stock, at 12:45, on 13-05-2015, at a given price and with a given Stoploss, and a given Takeprofit - optional. Most often, but that depends from algorithm to algorithm, the target "price" told by the buy signal is the price taken from the sample run; and in some cases the Stoploss is just the lowest price so far in the day. Both values are available directly from the sample run which originated the buy signal. A trading signal should contain sufficient textual material that allows a trader to understand the reasons behind the trade, as to why the algorithm sent a buy signal at this time. Along with the plausible reason or reasons, the trading signal should carry basic financial information of the security in question, regarding its liquidity and volatility and the position-size the algorithm recommends for this trade. With sufficient financial information about the security itself and the trade at hand, it is a precious guidance for a trader to know whether to enter in that trade or not.
   Typically a trading signal has to convey relevant textual information about what that trade is to the user. Information can be split into three distinctive sections: HEADER, BODY and FOOTER. In detail:
   HEADER
      Summarizes the trade. Relevant items that would appear in the HEADER are:
      ∘ time - the time this trading signal got generated in HH:MM. Signals are generated in real time and ultimately sent to users as alerts. Time displayed in alerts might have to be converted to the user's local time.
      ∘ type - either to enter in a position or to exit a position. And whether the position is long or short.
      ∘ security - unique identifier or "ticker" of the security to trade and the financial market or index in which it is exchanged. Ex: "IBE@ibex" means company IBERDROLA from the IBEX market. More information concerning that security (ex: company name) would appear here too.
      ∘ price - the target price at which the security should be traded at this point in time.
      ∘ stoploss - the recommended Stoploss limit for this trade if trade is to enter in a position. Note: trading algorithms should always provide a stoploss limit in their algorithm design. If one is provided, the resp. exit part of the algorithm must use that limit to generate a corresponding exit signal when that limit is hit - that would mean to exit the position at a predefined loss.
      ∘ takeprofit - optional. The recommended Takeprofit limit for this trade if trade is to enter in a position. If one is provided, the resp. exit part of the algorithm must use that limit to generate an exit signal when that limit is hit - that would mean to exit the position at a predefined profit.
      ∘ security profile - namely the measured liquidity and volatility of the security over recent days. Each of these can be: "very low", "low", "medium", "high", "very high". More financial information about the security would appear here too (ex: earnings).
      ∘ position size - depending on the security's profile above the platform recommends a position size for this trade. This can be: "none", "low", "medium", "high". The platform recommends users not to enter into a trade ("none") if the security shows very high volatility or very low liquidity.
         A qualitative indicator like "low" or "medium" is intended here instead of a quantitative indicator like the number of shares because each trader has a different opinion of what 1,000 shares of a stock really mean. Some may consider 1,000 shares to be a high position size, while others may consider it to be a low position size. That really depends for each trader.
   BODY
      The BODY would explain the reason or reasons in plain text why the trading algorithm has reached the signal to buy or sell the security. This will depend largely on the algorithm's own design and how well the designer or owner had organized the set of reasons to be spit out from the algorithm in this fashion. More details ahead.
   FOOTER
      The signature of the trading algorithm sending the signal. It includes the name of the trading algorithm as identified in the platform plus any relevant information, such as for example the decision branch in the algorithm which triggered the signal to buy or sell the security. The FOOTER enables the user to know which trading algorithm generated the trading signal he received because, as noticed earlier, a single user or group can subscribe to several trading algorithms at once.
▪ Trading Alert (26) - The notification that arrives at a user's mobile device in real-time. In the present embodiment notification translates in fact to a push-notification, which is a technology employed in mobile devices. Trading signals generated from Sims that run trading algorithms "live" will ultimately originate trading alerts for each subscriber (but see Filters below). For groups that are subscribers, the trading alert (27) is broadcast to all group members. Trading algorithms run by Sims in backtest mode will never originate trading alerts to users. The trading signals generated in backtest serve for statistics and performance evaluation only.
▪ Entry Filter - A setting from an account's financial profile (13) of a user or group. It is a filter for entry signals the user/group gets from the trading module (36). The platform applies this filter each time a trading signal to enter into a position is output from a trading algorithm. Instead of just converting the trading signal into an alert to be sent to each subscriber, the signal is first run through specific entry filters defined for each such privileged user or group that is subscribed. Basically the HEADER section of the trading signal is processed through the entry filter for entry signals. There's only one entry filter applicable per user/group that's valid for all signals of a given asset class (say, stocks) and timezone. Entry filters are entirely optional. If an entry filter isn't defined in the user's or group's profile, what that simply means is that every trading signal will be immediately converted into a trading alert without any filtering and just sent to his smartphone as is. If one is defined however, that means not all trading signals will reach his smartphone, but some are filtered-out along the way by the filters. Filtered signals aren't converted into alerts and don't reach a user's smartphone in the end. Example: user can define an "entry filter" in his financial profile in which he's only interested in getting alerts on stocks whose volatility is less than "high" (that means: "medium", "low" or "very low"). Trades on high volatile stocks are filtered-out intentionally and will never reach him. Another example: user can define a "entry filter" together with an "exit filter" in which trading signals past the 16:00 time are filtered out. That's because his broker cannot accept orders after 16:00, so he simply filters them out and won't be bothered by any late trading alerts he wouldn't be able to follow up.
▪ Exit Filter - same as Entry Filter but this time filter is applied for exit signals towards a privileged user or a group being the subscriber and the holder of the virtual position being closed.
▪ Virtual Position (9) - open position (simulated) that's kept in the portfolio of a privileged user (31) or group (19) at each deployment. When trading alerts are sent to a privileged user or group, after resp. entry filter is applied, the platform mimics the trade and executes that trade on behalf of the user or group that got the alert. It opens a virtual position as if the user or group had executed the trade on the market on the exact same terms the alert tells. That means a simulated position owned by the privileged user or group is created inside his portfolio. That position is on the security, with a target price, position size and stoploss/takeprofit limits (if any) as exactly stated in the alert. The platform additionally applies a virtual cost to the position to better mimic what happens in the real world brokers. See Virtual Cost below. Hence, the platform basically keeps and manages a virtual portfolio of currently open virtual positions for each privileged user and group. A virtual position is then closed when the corresponding exit alert is sent to the privileged user or group who owns that position. The platform would execute the trade to exit the position in the exact same way the alert states, just like it does to enter a position. Once a virtual position gets closed, that particular trade's result: profit vs. loss, is finally known and it's added to the now closed position for information. Old positions (37) and their results can be consulted at any time. They remain in the former user's or group's account space for tracking purposes but are no longer part of their portfolio of open positions.
▪ Virtual Cost - A cost that's automatically added (or subtracted) to a virtual position when it settles into the portfolio of a privileged user or group. To better mimic real world brokers, the platform applies a cost to the target security's price stated in the alert. It either adds a percentage to the target price or subtracts a percentage from it, depending on the type of trade it is (long vs. short). Costs are taken from the cost structure a privileged user and group defines in their financial profiles (13). These try to reflect the actual costs the bank or financial institution charge for trades given in the user's country and other particularities. Cost structure is a set of costs where each cost is defined per financial market and per position size. To make that a bit clearer, let's give an example: the bank of a particular user (trader) charges him a flat cost of 7,90€ when trading stocks in the PSI20 regardless of the position size, plus a 15,0€ cost when trading stocks in the IBEX market up to the 10,000€ volume cap. Beyond that cap, the bank charges a 0.15% of the volume size for each trade done in the IBEX market. With that cost structure in mind, and considering the trader's account balance and his risk profile for the "low", "medium", "high" position sizes given by: low → ∼3,500€, medium → ∼6,000€, high → ∼10,000€, he would then define the following cost structure on his financial profile (in this example, just for two markets: PSI20 and IBEX): three PSI20 costs: "low" → +0,20%, "medium" → +0,12%, "high" → +0,07%; three IBEX costs: "low" → +0,43%, "medium" → +0,25%, "high" → +0,15%;
   The given percentages, as costs, are added to the target price of the security when the virtual position is created inside his portfolio. For instance, if the target security, price and position size on the alert is for: an IBEX stock, with price="14.10" with position size="medium", and with stoploss="13.95" the platform executes that trade automatically on his behalf and creates a virtual position in his portfolio on that IBEX stock but with a settled price of 14,135 instead, after adding the cost of +0,25% to it. If the alert were for a short trade, then the cost would be subtracted from the target price instead.
▪ Virtual User - Special internal user that's created specifically for each trading algorithm. Virtual user stays subscribed to that specific trading algorithm forever and no other. This virtual user gets its own specific financial profile and virtual portfolio just like any other user. Its function is to keep track and measure the performance of that one trading algorithm. Different virtual users for a trading algorithm may be created to accompany the several state changes, whenever there's a need to track and measure performance of the trading algorithm within that state. In the present embodiment, a virtual user to track performance in the backtest phase; another virtual user for when it goes "live"; a new virtual user for a new revision to track the new performance; and so on. As can easily be deduced, virtual users are a good way to measure the performance of a trading algorithm in its several stages, i.e. by having a dedicated internal user who automatically executes the entry/exit trades as they are told exactly by the alerts the algorithm sends out. As with any real user, enter and exit filters and the cost structure of the virtual user can be tailored as desired by the staff (15) and defined in such a way to, perhaps, represent those of the average subscriber to make the rated performance even more realistic. Note here that the published performance of an algorithm is taken from its virtual user.
▪ Performance of a trading algorithm - The set of all profits and losses from individual trades done so far by its virtual user plus the total performance obtained overall - this gives a final performance rating. Performance is measured at each stage (backtests vs. live) separately by a corresponding and different virtual user. Because no actual position sizes (number of shares) exist and thus no real or virtual allocated assets to positions exist, the performance is only measured based on the security's price. The formula is: (SoldPrice - SettledPrice)/SettledPrice * 100, which yields a positive percentage (profit) or a negative percentage (loss). The SettledPrice is the security's bought price (target price when bought) aggravated by the virtual cost, which depends on the cost structure of the virtual user: SettledPrice = BoughtPrice * (1 + VirtualCost/100).
▪ Candlestick - Aggregated graphic form of the historical price action of a security. A Candlestick represents the open, close, highest and lowest prices attained in a specific period of time. Candlesticks are commonly found in trading charts. Algorithms based on swing trading or positional trading for instance tend to use daily candlesticks, whereas algorithms suited for day trading tend to use hourly or 10min candlesticks or even shorter period candlesticks. The platform makes historical price data available to algorithms in the form of candlesticks, a handy abstraction that wraps up the price movement of a security that went on in the course of a whole day, hour or 10min period, ranging from the immediate past (i.e. yesterday, an hour ago, 10min ago) to the more distant past (6 months ago, 6h ago, 120min ago).
▪ Technical Indicator - Indicator used in technical analysis. Each has a given mathematical formula and can be computed over historical price data or volume of a security. One or more technical indicators like those exemplified below and others can be used in the trading algorithm's design. The most common technical indicators are:
   ∘ SMA/N and EMA/N - simple and exponential moving averages on (closing) prices for the last N-days of a security, when daily candlesticks are used. If hourly candlesticks are used instead, then the last N-hours closing prices are employed for the computation of moving averages.
   ∘ RSI/14 - relative strength index. Compares the magnitude of recent gains to recent losses in an attempt to determine overbought and oversold conditions of a security. N is typically 14.
   ∘ MACD - moving average convergence divergence. Shows the relationship between two moving averages of prices. The MACD is calculated by subtracting the 26-day exponential moving average (EMA) from the 12-day EMA. A nine-day EMA of the MACD, called the "signal line", is then plotted on top of the MACD, functioning as a trigger for buy and sell signals.
   ∘ Stochastic - A technical momentum indicator that compares a security's closing price to its price range over a given time period. The oscillator's sensitivity to market movements can be reduced by adjusting the time period or by taking a moving average of the result.
   ∘ Plus a range of many other technical indicators the platform may or may not support due to popular demand.
▪ Fundamental Indicator - Indicator used in fundamental analysis. Each is derived from the quarterly/yearly company earnings reports. In addition to technical indicators, some trading algorithms may employ fundamental indicators as part of their design plan.
▪ Hunching Data (38) - data from an "external" source that is fed to a live trading algorithm, if prepared to accept such data. The purpose of it is to act like a "hunch" - hence the name. Only expert users (6) can feed hunches to trading algorithms, inclusively the owner (7). Hunches may influence the outcome of a trading algorithm that's running live with respect to one or more securities. The design plan of the trading algorithm must have made preparations to accept hunches to begin with. They are merely optional. Very importantly, the trading algorithm should basically work without any hunches, as they aren't available in backtests either when the algorithm was tried out. A very simple approach to handling hunching data would be to accept a hunch per security only. If more than one security should be affected then separate hunches must be given for each one. Trading algorithms that have been prepared for hunching would alter slightly their trading signal outflow in order for them to enter or exit a trade in an attempt to improve performance compared to having no hunch over the same security.
   As an example, a live trading algorithm generated a buy signal for one particular security and in consequence the platform opened a virtual position for each subscriber that didn't filter the entry signal. Then, a renowned group leader who's also an expert user and knowledgeable with what concerns the trading algorithm in focus thinks the security on the open position will trend up significantly based on some recent news about the resp. company. He feeds hunching data with respect to that security into the algorithm telling it to delay its "normal" sell signal for a second round that's appropriate (example: wait until a higher resistance line is hit). Of course hunches might make things the wrong way, and instead of improving the trade they could actually make it worse (follow up on the previous example: price didn't end up reaching the higher resistance line and it has now dipped towards the stoploss: trade is now at a loss instead of a profit had it been sold when the security's price had hit the first resistance line with no hunch). One important point worth emphasizing about hunches is that hunches affect all subscribers of the trading algorithm: every user and every group, not just the expert user who fed the hunch. They all would gain or would loose accordingly with the effect of that hunch. That said, hunches should be carefully and sparsely employed for algorithms that are prepared for them.

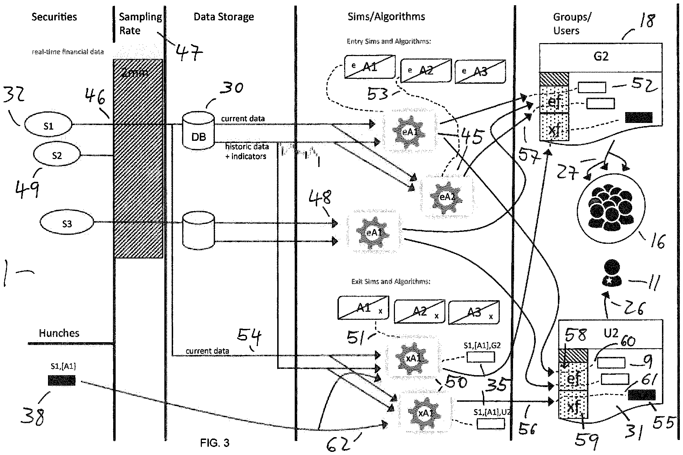

### With reference to FIG. 3 - PLATFORM FUNCTIONAL VIEW:

The platform (1) fulfills the server-side component of this invention. Its main function is the running of the trading algorithms (23) in the form of computing instances called Sims (45) and dispatching the generated trading alerts (26) and (27) to its subscribers. Subscribers as registered users (11) of the platform receive the alerts in their smartphone or tablet in real time (26). Subscribers as a group (16) instead, broadcast the alert (27) to all its group members.

The platform is functionally split into the following subsystems:

### CAPTURE OF FINANCIAL DATA (46)

Securities (32) that are supported by the platform are captured in real time from the financial markets. Or with a minor delay (typically 15min delay) if real time is not possible. The capture proceeds in regular sampling intervals, say every 2min or every 10min (breaks may have to be observed for some financial markets, like lunch break for instance - captures should stop during the break). The sampling rate (47) can be pre-adjusted per asset class if required. Ex: stocks would be sampled every 2min whereas ETFs every 10min. After the sampling rate has been defined per asset class it must never change (unless for an awful good reason) because trading algorithms targeting those securities may break if it does...

Since financial markets are spread over different timezones in the world, the times capture start and end depends on the financial market the security is exchanged. So for the European stock market for example, it opens at UTC 0800 and closes at UTC 1630, whereas for the Hong Kong stock market (HK), the opening hours are at UTC 0130 until UTC 0800.

It pays off to divide the securities based on timezone, as well as by their asset class. In this sense separate platform instances called deployments in the present embodiment may be running over different geographically-located servers across timezones. Trading algorithms are fed only by securities that are traded on one timezone and from a given asset class.

Each captured sample generates a data record indexed by [security, date, time] with values [price, open, close, high, low, volume]. Please refer to Financial Data Sample earlier.

All data except for the volume is price data and it's given in the currency that operates in that financial market; volume is a number.

Each record is then handed-over to the Storage subsystem for further processing.

### STORAGE OF FINANCIAL DATA (30)

Records are unique and can therefore be stored persistently in a database or file system on platform servers. They can be retrieved later to serve as historical data and for computation of a wide range of technical indicators.

Some technical indicators require that financial data of a security be available for at least 50 days or more to yield proper results. Trading algorithms that rely on such technical indicators would start to yield signals only after that amount of days have been collected by the storage subsystem. Securities may change over time, as companies go bankrupt or companies merge, and so security capture and storage require non-negligible maintenance work on a regular basis. Many trading algorithms may only start to give signals on newly formed securities after several days had gone by, since these use technical indicators of fifty or more days.

### RECORD FEED TO TRADING ALGORITHMS LIVE (48)

For securities (49) that are supported by the platform, and so actively captured in the resp. financial market in which they are traded but not currently targets for a trading algorithm in live mode, its records are just flushed to storage (30) and story ends there. These records will serve later for backtests when a new trading algorithm begins to target those securities. For securities that are targets of live trading algorithms, its records are simultaneously stored and fed (48) to the Sim that's running the trading algorithm (45). One security such as S1 in FIG. 3 (32) may be target of multiple trading algorithms, and so its records are separately fed to each Sim that runs them. Sims not only include the entry Sims (45) (Sims that are running the entry part of a trading algorithm) but also the exit Sims (50). These Sims run the exit part of a trading algorithm (51) for each virtual position that is open (35). Platform creates a virtual position (9) on behalf of each privileged user and group that is a subscriber to a trading algorithm that caused an alert to reach them. Example: if twenty subscribers got alerted by the trading algorithm to enter in a position on a given security, the platform would open twenty virtual positions one for each subscriber. A group (18) just counts as one subscriber, so only one position (52) is created in the group's portfolio which is shared by all its group members. That's the reason why groups, as a feature, are a means to save on computer resources and aiming towards scalability.

Each currently open position (35) will spawn an exit Sim. This exit Sim runs the exit part (51) of the trading algorithm which caused that open position to be created in the first place. One exit Sim runs that algorithm for one dedicated open position.

In summary, sample records of a security must be fed to every entry Sim (45) that runs a trading algorithm that target this security and to every exit Sim (50) that runs a open virtual position on this security.

### RECORD FEED TO TRADING ALGORITHMS IN BACKTEST

Trading algorithms submitted for backtests run with historical financial data in offline mode, rather than live. Each stored record is fed to the trading algorithm in sequence and by chronological order. For the Sim that is running a trading algorithm in backtest mode, there's no difference if records are fed to it from direct storage or captured in live samples. It makes no difference either, if records are fed once every 10min or one after the other without pause as the records themselves are time stamped and it's from this time stamp Sims derive the time used in the algorithm and in the signals they generate.

### SIM ARRANGEMENT IN TRADING ALGORITHMS LIVE

Because of the timezone/asset class split to trading algorithms, Sims run in a specific deployment.

### ENTRY SIMS (45)

When the market opens in that timezone, a Sim is created for each security (32) a trading algorithm targets in that market. Sim runs the entry part (53) of the trading algorithm against one specific security. It is then fed with regular samples of that security while the market is opened. If breaks must be observed during the day like lunch break, the capture of samples are temporarily halted and resumed again when the break is over. Sim is finally deleted when market closes at end of day.

The next day this process is repeated all over again. No internal data of Sims survive to see the next day. At day close, all Sims are deleted along with their internal state.

At the same time samples are fed to Sims, these are also committed to storage (30).

### EXIT SIMS (50)

Likewise, when the market opens a Sim is created for each currently open virtual position (35) on securities in that market. These Sims run the exit part of a trading algorithm (51) over one dedicated position the trading algorithm have signaled to enter to its subscribers. A virtual position (35) holds the security and the trading algorithm's identification, which allows for the Sim to run the right trading algorithm against that position. The Sim is then fed (54) with regular samples of that security while the market is open. Exit Sims, like all Sims, are also deleted when the market closes along with all their internal data.

If a virtual position remains open after market close, it will serve to re-create the exit Sim the next day all over again and the process is repeated.

An exit Sim is also created on the spot once a virtual position is opened during the day. And it's deleted on the spot once a virtual position gets closed during the day. Their life cycle maps 1:1 to an open position.

Virtual positions that remain open after market close are kept persistent inside their subscriber's portfolio (31) and will spawn exit Sims the next day.

If an alert to exit a position is generated by the exit Sim, the virtual position is closed (55) in the platform can measure this trade's performance: profit vs. loss, calculated to yield a percentage. Closed positions move out from the portfolio into a separate space with their assigned profit/loss ratio. The overall performance can then be computed for each subscriber and for each trading algorithm (from its virtual user) from the set of positions closed. Once a position is closed, its associated Sim (50) gets deleted right away from the system. Positions closed won't spawn new Sims the next day.

### SIM ARRANGEMENT IN TRADING ALGORITHMS IN BACKTEST

In the backtest phase the trading algorithm is put under test with historical financial data from the securities it wants to target. Typically 6-18 month old data, more or less in that range give or take, is used to feed the trading algorithm. The right time period should fall in the range of past 6-18 months, not any other period (ex: the dotcom crash back in 2001). That's because the platform incites its traders and community to come up with new trading algorithms to meet the current market conditions felt today, not ten years ago. How the new algorithms perform under those market conditions long ago, at a time when probably the macro-economic landscape was quite different than today's, and as interesting as that could be, doesn't help the community on today. A constant supply and ready-for-action trading algorithms, able to match reasonably well the current security markets, even if short-lived, is here intended.

Backtest proceeds in daily steps. Records from the oldest date are fed first in a timely sequence. Sims are created for this day and deleted when day is over. Then records for the next day follows and this process is repeated until the last day from the backtest period is fed. The right backtest period and the right securities to target must be part of the setup made by the owner and platform staff.
One virtual user gets created as the single subscriber to the trading algorithm under backtest. Before the backtest begins, no virtual positions exist in its portfolio so to measure the performance correctly. When alerts to enter into positions are generated from entry Sims towards the virtual user during backtest, the platform opens virtual positions for the virtual user. These move to its portfolio and remain open throughout the backtest phase until eventually closed by an exit Sim. With every virtual position a corresponding exit Sim gets created each day and financial records on that security start flowing from storage towards that Sim as well. Once the backtest ends the virtual positions closed in the meantime from the virtual user are employed to measure the final performance the trading algorithm attained in the backtest period.

### RUNNING TRADING ALGORITHMS

Sims are the computing instances in charge with running trading algorithms. As described earlier, Sims are created at the start of a new day when the financial markets open, one for each security (32) the trading algorithm targets and one for each virtual position (35) "spawned" by the trading algorithm towards some subscriber. Sims are dismissed (deleted) when markets close at the end of the day.

There is one Sim instance per security that a trading algorithm targets. This Sim runs the entry part (53) of the algorithm. With each sampled financial data taken from the security in the market (see Financial Data Sample from section DEFINITIONS), the Sim executes the algorithm "once" based on that financial record. If it runs to completion, a trading signal to enter in that security at the price the record shows is triggered. If not, nothing happens and the Sim silently awaits the next record. For more details how Sims work please refer to section TRADING ALGORITHMS further ahead.

There's also one Sim instance per virtual open position. This Sim runs the exit part (51) of the trading algorithm that caused the position on a certain security to be created (each virtual position holds information over which trading algorithm caused it to be opened). This Sim is in charge to produce an exit signal (56) for that position during market hours. With each sampled security financial data taken from the market at regular intervals (see Financial Data Sample from section DEFINITIONS), the Sim executes the algorithm "once", the exit part this time, based on that financial record. If it runs to completion, a trading signal to exit the position at the price the record shows is triggered. If not, nothing happens and the Sim silently awaits the next record. If no exit signal is triggered during the course of the day, the virtual position remains open in the system and shall lead to a new exit Sim being created the following day when the market reopens.

Please jump to TRADING ALGORITHMS in the next section now! For more details on how Sims run trading algorithms and what trading algorithms effectively are. Afterwards, resume reading this section.

### GENERATING TRADING SIGNALS

This part assumes the reader has read about TRADING ALGORITHMS and knows details about its contents.

The two atomic functions that yield trading signals in a trading algorithm are the <BUY> and <SELL> functions, by convention. These should normally appear at the end of any algorithm. For trading algorithms covering long positions for instance (long vs. short) the <BUY> function appears in the entry part of the algorithm while the <SELL> function appears in the exit part of the algorithm. For algorithms dealing with both long and short positions, then both <BUY> and <SELL> (sell short) can appear in both entry and exit parts simultaneously.

### ENTRY SIGNALS (57)

When the <BUY> or <SELL> function in a entry part of an algorithm is invoked, after all functions at the top have passed on, its outcome is the generation of a trading signal to enter into a position on that security by the target price that's on the record run. The type of trade (long vs. short) and the type of security dictate the type of trading signal that is going to be generated. The <BUY> or <SELL> functions may specify in their signatures the stoploss and takeprofit limits for this trade. What these limits will actually be depend from algorithm's own design plan, i.e. its trading strategy. Some algorithms may not want to deal with takeprofits at all. Stoploss limits are strongly encouraged to be used in algorithms though, but aren't enforcing. Before taking on a new trading algorithm for evaluation, platform staff may reject it if it lacks a stoploss limit in its design for example.

The trading signal textual message is composed according to the body parts described in Trading Signal from section DEFINITIONS. Platform attempts to send it to every subscriber. Although before the signal arrives as proper alert to a user's smartphone or tablet, the entry filters (58) of each subscriber's financial profile must be processed. This is described in Trading Alerts from section DEFINITIONS.

In particular, the "reasons" part in the body of the trading signal shall be composed by appending alertstring XML attributes found in the algorithm in reverse-order. More on that later.

The Footer of the trading signal is signed with the name of the trading algorithm.

In the end, the entry signal text would look like the following (an example):

| | |
|---|---|
| (15:22) BUY EZE@ibex (EZENTIS) at price=0.825 w/ stoploss=0.81 | 1 |
| liquidity=medium, volatility=high | 2 |
| Recommended position size: low | 3 |
| Green candle with +4.31% body that penetrates well into the | 4 |
| downtrend with a closing price of 0.819 | 5 |
| Buy strategy by [downtrev] | 6 |

### Description (line numbers on the right-hand side)

### (HEADER)

- The first line tells the time, the security (EZE) and the underlying exchange market (ibex) for this trade. The type of trade is BUY (but could have been SELL SHORT for short positions). The target price to buy this asset is at 0.825 (currency in euros in this market) with a stoploss limit of 0.81. Takeprofit limit is not used.
- The second line gives the profile for that security: liquidity, volatility.
- The third line gives the recommended position size in quality rather than quantity terms. It's up to each user to map this recommendation to a specific number of shares or trading money he would like to risk on this particular trade. Examples: small account traders may consider a "low" recommendation to be around 1,000€ for example, while other big account traders may scale up a "low" position size to be around ∼10,000€ for example.

### (BODY)

- The fourth and fifth lines are examples of reasons why this signal was triggered. Textual descriptions like the one shown here are written at suitable locations in alertstring attributes across the trading algorithm by hand of the designer. Retail traders would rely on such information to decide whether or not to follow up on the trade. They also pinpoint the exact decision branch of the algorithm that originated that signal.

### (FOOTER)

- The sixth line is the signature of the trading algorithm, which in this example is named "downtrev". Every trading algorithm have a unique name in the platform that identifies it.

### EXIT SIGNALS (56)

When the <SELL> or <BUY> function in an exit part of an algorithm is invoked, after all functions at the top have passed on, its outcome is the generation of a trading signal to exit the corresponding position the exit Sim is in charge of. The target price to exit the position is the one on the record run. Exit signals may be generated due to at least three reasons:
(a) the position has a stoploss limit and this limit was hit or surpassed by the security's price by the current record run - the stoploss branch of the exit algorithm triggers the signal;
(b) the position has a takeprofit limit and this limit was hit or surpassed by the security's price by the current run - the takeprofit branch of the exit algorithm triggers the signal;
(c) neither the stoploss or takeprofit limits were hit in the current run, and the exit part of the algorithm ran to its full, via some other branch, one that made it go through to find a <SELL> or <BUY> function - another branch of the exit algorithm besides the stoploss and takeprofit branches.

All (a), (b) and (c) branches and eventually more, must be designed and explicitly coded as part of the exit part of the trading algorithm. The reasons for the exit signal must be properly written in the algorithm's structure accordingly to such branches.

Like in the entry signal, the platform then composes the exit trading signal message in textual form in order to be sent to the subscriber that owns the virtual position, telling him why the exit signal was triggerd and what was the reason of it: (a) by stoploss, (b) by takeprofit, (c) by reason A (d) by reason B, etc.

The exit signal text would look like the following (an example):

| | |
|---|---|
| (11:29) SELL EZE@ibex (EZENTIS) at price=0.802 (-3.0%) | 1 |
| Stoploss=0.81 reached! | 2 |
| Sell strategy by [stoploss] | 3 |

In this example the exit algorithm had given out a trading signal to exit that position at a loss, since the stoploss limit=0.81 was hit by the price of the EZE stock, as sampled from the market at 11:29. Note that because of the sampling interval being non-continuous (2min intervals) and the stock being highly volatile, the exact price of 0.81 couldn't be caught by the system in real time. The price of 0.802, sampled at the end of the 11:29 interval, was the one that surpassed the stoploss limit for the first time and the sample run that made the algorithm yield the exit signal above.

The HEADER is the first line here, which tells the subscriber who owns that virtual position to exit the trade at that target price. The percentage in parenthesis would be the loss of this trade if position is to be closed at the current target price. Let's see now why the loss is at -3.0%: the platform opened a virtual position for this user who was a subscriber to the trading algorithm that targets stocks in the European market, such as EZE here from the IBEX market. The position on EZE was acquired virtually at price=0.825, but the platform had applied a cost increase to that position, which made the position's settled price climb up to 0.827 in his portfolio. Let's assume this particular user had defined a cost structure on his financial profile that associated a cost of +0.25% to low position sizes from the IBEX market. Remember that EZE had a low position size recommendation at the buy signal. So, to break even, the user has to sell the position at 0.827 at the minimum. By having to sell at 0.802, which falls below the stoploss limit, the loss becomes: 0.802 = 0.827 - 3.0%.

Now, depending on the actual position size the user exposed himself to the EZE stock, this trade may make him loose some money or a lot of money at -3.0% loss. Imagine the position size was 2,500€ in fact in his real trading account. That means the trader would have lost 75€ with this trade. If it was 15,000€ however, the trader would have lost 450€ instead!

The BODY, which is the second line, tells the reason or reasons of why this exit signal was triggered. In this case was due to the stoploss limit being reached.

The FOOTER is the third line and makes up the signature of the trading signal. In this case it can be the name of the winning branch of the exit algorithm that successfully reached a <SELL> function.

In alternative to the trading signal shown just above, which was at a loss, here's an example of a profitable exit signal being generated:

| | |
|---|---|
| (15:57) SELL EZE@ibex (EZENTIS) at price=0.842 (+1.8%) | 1 |
| Closing below the T-Line at 0.845 | 2 |
| Sell strategy by [Tline] | 3 |

In this case the exit signal yields a profit of +1.8% for this trade on EZE. The reason the signal was generated appears in the BODY of the message in line 2: "Closing below the T-Line at 0.845". That message and the reason why the signal was triggered on this record run at a price of 0.842 is of course entirely up to the designer who devised it. Here, the T-Line is an indicator based on the EMA/8 (8-day exponential moving average) that's used a number of times in technical analysis to both enter and exit positions. The designer had obviously used the T-Line indicator in his design plan as one of the possible options or branches to exit a trade.

### FILTERING TRADING SIGNALS BEFORE ALERTS

Trading signals will eventually lead to trading alerts that reach every subscriber of the trading algorithm which generates them. See Trading Alert from section DEFINITIONS. But before that, trading signals are processed by each subscriber's profile filters that have been defined for them. See Entry and Exit Filters from section DEFINITIONS. The filters include a set of instructions on how to process each entry signal and each exit signal for the subscriber: a privileged user or group. Each privileged user and group gets one entry filter (58) and one exit filter (59) per pair of asset class and timezone.

When a trading signal is generated, the platform runs the settings there specified for each subscriber in the case of entry signals, and for the specific subscriber in the case of exit signals. The filters basically filter-out or optionally modify the signal's wording before sending it out to become an alert towards a given subscriber. In its simplest form, filter would filter-out completely the signal or forwards it through without modification. After filter instructions have been processed, the resulting trading signal now becomes a trading alert (26), if not filtered-out, that will be effectively reach the subscriber's mobile device. If subscriber happens to be a group, alert (27) will be broadcast to every member.

In case the subscriber already has a virtual position on the security in its portfolio (31) and an entry signal is generated on the same security from a trading algorithm (can also be the same of the position), the resp. entry filter (58) may alter the trading signal's wording to alert him to reinforce the position instead. Another option in such case would be to filter-out the signal altogether so that subscriber will never be alerted to reinforce already existing securities (in a position) in his portfolio. Note: because number of shares as a quantity is not dealt with here, the existing virtual position will not actually be reinforced and no price will need to be adjusted because of that.

Let's look at an example where the entry signal gets transformed by a filter that lets the user know to reinforce an existing position he already owns (example):

| | |
|---|---|
| (15:53) SELL SHORT MAU@cac (MAUREL ET PROM) at price=7.837 | 1 |
| w/ stoploss=8.151 | 2 |
| liquidity=high, volatility=high | 3 |
| Increase position size | 4 |
| Red candle with +4.45% body that penetrates well into the | 5 |
| uptrend with a closing price of 8.188 | 6 |
| Short strategy by [uptrev] | 7 |

The noticeable difference in this alert is that where the position size recommendation used to be now just reads: "Increase position size" in line 4. That's an indication to the subscriber that a short position on MAU already exists in its portfolio and an additional signal to go short on the same security MAU has been triggered by the same or different trading algorithm he's also subscribing at the moment. Depending on what the entry filter defines for that asset class in the timezone, reinforced signals such as these may just tell him to reinforce the position. In the end of the day though in the real world, it's up to him if he really wants to increase his position size on MAU or not, given this alert.

Filtering instructions go beyond reinforcement. They can provide a means to filter-out signals on highly volatile securities or on low liquid securities. Also, filters can work for a set of securities and markets the user specifically defines, so to let signals go through just for a given subset. In general, the instructions that filters run with are based on the textual expressions the trading signal is composed of. In that sense, any textual expression such as time, type of trade, the security, the market, the volatility, the liquidity, the position size, the strategy, and so on, can become the basis of filtering. Logical combinations of such expressions are also possible within instructions. Ex: filter-out stocks that are signaled after 16:00 "or" when their position size are low or none.

Note that filters are entirely optional. They default to just forward all trading signals without any type of filtering.

### OPENING AND CLOSING VIRTUAL POSITIONS

Only trading signals, if not subsequently filtered-out, which are now called trading alerts to distinguish one from the other - that is, when actually reaching a user's device, is what make the platform open or close virtual positions in the subscriber's portfolio (31). A subscriber may be a privileged user or a group, Each of them has a dedicated portfolio in the platform. This portfolio holds all virtual positions (9) for that subscriber, regardless of the trading algorithms he subscribes. The platform creates a new virtual position (60) when a trading alert to enter into a position on a security is sent to him. That position mimics exactly what's in the alert: security, type of trade (long vs. short), price, stoploss, takeprofit, position size (qualitatively). Only the applied cost aggravates the price of the position when it is finally settled into his portfolio. Refer to Virtual Cost in earlier section. All other characteristics of the trade remains.

Once a virtual position is added to a portfolio an exit Sim will be spawned that takes charge of that position (35), as described earlier. This Sim runs that trading algorithm's exit part and tries to exit that position at a profit according to the algorithm's design plan, or if things go sour, exit the position at the stoploss limit in most cases.

Once the corresponding alert to exit that position is sent from the exit Sim in charge, the platform closes the position (61) and moves it out of the user's portfolio into a separate space of closed positions. It then assigns to it the performance of that trade. As said earlier, this space serves for statistics and to compute the overall performance for the user so far. After position close (55), the corresponding exit Sim is also deleted at this point.

### FEEDING HUNCHES TO A TRADING ALGORITHM (38)

Trading algorithms running live can be fed (62) with external hunching data (38) to slightly alter its trading behavior, if their design plan was prepared for it. The goal is an attempt to improve the performance by external aid. See Hunching Data from section DEFINITIONS. The input hunches provide and how the flow of the algorithm changes must be explicitly handled in the algorithm itself. Therefore only the owner of the trading algorithm and a handful of other expert users, who are familiar with the algorithm in question, can know what those hunches actually are and what effects they have. Any expert user is entitled to provide one or more hunches at convenient market hours. But he must know what he's doing, since his actions will have a visible effect on all the subscribers, not just on himself.

He typically uses his handheld device to submit a hunch (38) to a given trading algorithm he's familiar with. A hunch has some value (string or a number for example), so the user assigns a certain value to that hunch and submits it into the platform when time is deemed appropriate. Hunches are given per security. A trading algorithm might share the same hunch with others or have one specifically tailored to itself. A hunch might just mean: "it's going to trend up" for a given security. A default value for a hunch is an empty-string by convention. All securities are given empty hunches initially for each trading algorithm. For algorithms in live mode that support hunches, it may happen every once in a while that a hunch is given to it for a security. That hunch will most probably alter the algorithm's normal design flow according to the plan as set out by its owner It is applicable to both entry and exit parts of the algorithm, although it can happen that according to design hunch only takes effect in one of the parts. Hunches are persistent and endure over daily sessions. Note that Sim's data and Sims themselves get deleted at the end of each day. In contrast, hunches persist in the same manner as positions in a portfolio, although they're quite different in the way they're handled inside the platform. Hunches become void and their effects gone when they revert to their defaults. This may occur in one of three ways: (a) until explicitly removed by the expert user who submit it (expert user can submit a hunch and days later remove it); (b) when a trading signal is generated on the exact security with which the hunch was given - which could mean the hunch may have served its purpose, or not; (c) by the platform staff - here the consideration is that the hunch given on the security didn't turn out to be true as expected after some days have gone by, so in order to bring the algorithm back to normal and cancel unneeded disruption, the hunch is removed by staff.

An example of a hunch follows: when good news about a certain security (company) recently break out, that means the trading algorithm that goes long on that security might improve the performance of its exit signal with a hunch given at this time. According to the design plan of the hunch the algorithm will try to postpone its exit signal or cancel out the takeprofit limit altogether to try to exit the position at a more profitable price level. Like for instance aim for a higher resistance line of that security. Although, as with any street hunch, they sometimes turn out favorably, other times make the performance even worse.

At the risk of being engulfed by hunches every time a trading algorithm is put live, because too much hunches tend to make a trading algorithm's performance erratic, not to mention its backtest performance rating totally meaningless (because no hunches are possible in that phase), the platform staff must take forceful action regarding hunching data.
Staff must carefully oversee what effects hunching has on trading algorithms that announce support for them. Hunches should only serve as a means to "slightly" alter the algorithm's normal flow. Never to the point at which the algorithm's own design changes considerably by the effects of hunching or even turns the algorithm totally around. Trading algorithms having nasty effects due to hunching must wind up rejected by the staff.

### TRADING ALGORITHMS

Trading Algorithms are the most important asset of this platform. They are the exchange vehicle that makes retail traders band together in a community. They are the resulting product of human inspiration, the same way books are to a bookstore; they are published; they are assessed, reviewed and revered by peers; they are executed so to fulfill their work; they are tracked, rated and commented upon; they serve as inspiration for more trading algorithms to come, thus giving rise to a highly dynamic and virtuous cycle. They are the single reason the community exists. That's why they're so important in this invention.

More technically, a trading algorithm is a XML file that's split into two parts: an entry part and an exit part. The algorithm itself, both entry and exit parts, is valid for all the securities it is designed to target. The security targets may range from just a few (say: PSI20 stocks -> 20 securities) to a large number of them (say: STOXX600 -> 600 securities), as long as they belong to the same asset class in a single timezone. Refer to Target Securities from section DEFINITIONS.

### THE ROLE OF THE DESIGNER

Both the entry and exit parts together must of course coordinate with each other in an attempt to yield profitable trades. The designer of a trading algorithm, who is an expert user in the community, would normally be someone with a lot of experience in the financial markets and who most probably studied the securities he wants to target at length in order to conceptualize a new trading strategy that might just "work" under current market conditions. Existing strategies and concepts from other trading algorithms may serve as inspiration as well for the new strategy he would like to bring to life. So the expert user, very much like a designer would do, conceptualizes a trading strategy to explore his novel ideas and then gives them body by formalizing them into a proper trading algorithm. The ultimate design work would be the fully compliant trading algorithm that's specified in XML which bears applicable set of rules and layout.

To push expert users to come forward with new ideas and make the necessary effort, the platform gives monetary compensation for how many subscribers the trading algorithm will have. The more subscribers follow the trading algorithm the more money the owner or designer will receive. The platform may implement such schema with the same payment technology in-app purchases or in-app subscriptions smartphones use, without having to resort to the more traditional money transfer.

### THE CONSTITUENTS OF A TRADING ALGORITHM

Trading Algorithms are split into two self-contained parts, as described earlier: the entry part and the exit part. Here and in the sections that follow, the term "trading algorithm" refers to a trading algorithm part, without discriminating which part it is unless explicitly mentioned.

A trading algorithm is composed of a sequence of atomic functions. An atomic function maps to a XML tag, with XML attributes as parameters passed on to the function. There are many different tags or types of atomic functions supported. Each type has a specific internal data model and a specific functionality. Knowledgeable algorithm designers understand what each function does in detail, just as programmers understand the programming language they code in, obvious things like syntax, semantics, construction rules.

When a Sim is created the platform loads the resp. trading algorithm into memory that this Sim will run. The Sim instantiates the atomic functions declared in the algorithm and chains them together in the strict order the algorithm describes them in XML. The XML layout declares the atomic functions, as tags, forming a strict sequence, that means one follows after another as XML siblings, and one may fork the sequence (the <FORK> function) into two or more branches in that point. Each branch is itself a sequence of atomic functions that may itself be forked a number of times. Nested branches are thus possible. Two or more branches may be joined and collapse into the parent sequence through an atomic function called a junction point.

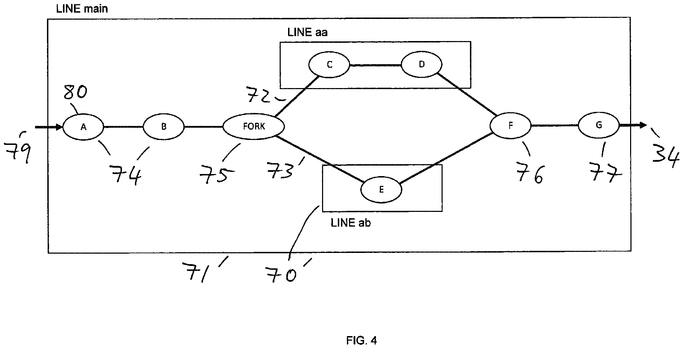

FIG. 4 represents graphically a trading algorithm (one of its two parts; both parts share the same structure as detailed herein) to pinpoint its main constituents. In the context of this invention, a LINE (70) is a sequence of atomic functions. There can be one or more topmost LINEs (71) in a trading algorithm. Each LINE can have LINEs as children when branches are formed from it (72) and (73). Atomic functions are also called NODEs (74) in this context. Two or more branches are formed only from a especial node called a FORK (75). Any node can be a junction point (76) where branches end and collapse into the parent LINE (71). The final atomic function (77) should yield a trading signal (34) as result.

When an atomic function is firstly instantiated, its internal state acquires values based on the input parameters from the XML attributes, while the remaining data acquires default values. Atomic function's internal data is kept for as long as the Sim runs in the market for a single day (or in a daily backtest). All atomic function instances are deleted when the Sim is deleted at market day close. Refer to Sims from section DEFINITIONS.

FIG. 4 maps 1:1 to the following trading algorithm in XML form:

| | |
|---|---|
| <BUY_XXX> | 1 |
| <LINE line="main"> | 2 |
| <A attr1=".." attr2=".." ... /> | 3 |
| <B attr1=".." attr2=".." ... /> | 4 |
| <FORK> | 5 |
| <LINE line="aa"> | 6 |
| <C attr1=".." attr2=".." ... /> | 7 |
| <D attr1=".." attr2=".." ... /> | 8 |
| </LINE> | 9 |
| <LINE line="ab"> | 10 |
| <E attr1=".." attr2=".." ... /> | 11 |
| </LINE> | 12 |
| </FORK> | 13 |
| <F attr1=".." attr2=".." ... /> | 14 |
| <G attr1=".." attr2=".." ... /> | 15 |
| </LINE> | 16 |
| </BUY_XXX> | 17 |

In the above example, the algorithm's named "XXX" (line 1) part is the entry part. Its last atomic function G (line 15) is expected to hopefully generate a trading signal to enter in a position when execution flow reaches it. See below. Conventionally only <SELL> and <BUY> functions generate such signals, which means function <G> at the bottom could either be <BUY> for long positions or <SELL> for short positions. Which one it is depends on the trading strategy the algorithm has been designed to do. The topmost LINE is named "main" in this example (line 2) which holds a sequence of atomic functions (lines 3 to 15). The first atomic function is the <A> function (line 3). This atomic function will be called every time on each periodic sample run. Atomic functions hold a number of attributes (here attr1, attr2) that correspond to the function's signature and provide the input parameters to it. Meaningful attributes per function must be assigned by the designer. These may be integers, price data, thresholds, strings, etc. They can also contain expressions to be evaluated by the Sim upon calling the function. The main LINE contains one <FORK> function (line 5) that branches out the algorithm into two alternative sequences: the "aa" LINE (line 6) and the "ab" LINE (line 10). Each starts its own sequence of atomic functions. LINE "aa" holds two atomic functions (lines 7,8) and LINE "ab" holds just one (line 11). The two branches collapse back to the main line in function <F> (line 14). The last atomic function is <G> (line 15), which in most cases it is also the function yielding a trading signal of the algorithm.

### EXECUTION FLOW

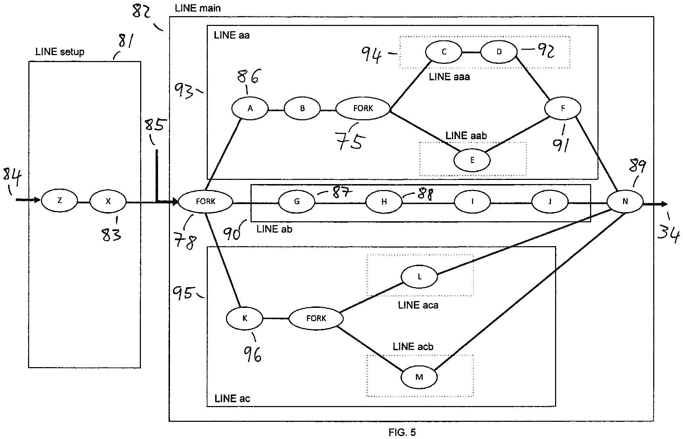

For each periodical sampled financial record that's fed to the Sim, the Sim runs the algorithm once. Sampled records trigger the Sim periodically with fresh financial data from the security the Sim is responsible for. The way the Sim runs the algorithm it is charged it's called the execution flow. It starts by picking the "right" topmost LINE (71) of the algorithm and invoking or calling (79) the first NODE (80) in that LINE. For algorithms that have only one topmost LINE, like in FIG. 4, the first NODE (80) of that LINE (71) is always called first in every sample run (79). For algorithms like in FIG. 5 that have more than one topmost LINE (81) and (82) the exact LINE to call depend on whether this LINE had run its full course or not in the day. If one entire topmost LINE (81) runs to completion, that is, execution goes throughout its entire atomic sequence to reach its last atomic function (83) which passes successfully too, then this LINE had run in full and it's now dismissed from the Sim running the algorithm. It will never be called again (84) during the day for any future samples. Execution flow continues through to the next topmost LINE in the algorithm (82). After this sample run is over, all following runs fed to the Sim now start calling (85) the second topmost LINE (82) until this one too runs its full course. The last topmost LINE of an algorithm (82) though, is never dismissed and sample runs continue to call it (85) throughout the day, even if it had run to its full one or more times.

When an atomic function or NODE (86) is called, the function performs its "function" given the current financial record being fed to it. The atomic function may do various things depending on what's been programmed to do: it may update its internal state; it may fetch and use global data and/or write into global data; it may send a trading signal; it may change the execution flow to rewind it back to the beginning, or rewind the execution flow one step back to call the predecessor a number of times, etc. And then function must terminate. When it does it either fails or passes. If the execution flow rewinds, function fails by convention but Sim does not and execution proceeds from the new point forward.

### ATOMIC FUNCTION FAIL

If an atomic function or NODE (83) fails, the execution of this sample run fails entirely if there are no alternative branches left (see ahead). If the atomic function that failed happens to lie directly on a topmost LINE (81), the entire algorithm fails at this run. Upon failure, the Sim does nothing and just waits for the next run to kick-in, which will follow shortly in the next period or immediately after in backtests. Atomic functions that failed do not rollback and get to keep their internal state. Likewise, global data if written by the function that failed, do not roll back either. Functions not called in the execution flow (ex: those standing ahead, or those from uncalled branch LINES) don't perform their "function" and their state remains as it was.

### ATOMIC FUNCTION PASS

If an atomic function passes (87), the execution flow carries on to the next atomic function (88) in the LINE sequence, unless it is either:
(a) the last atomic function of the LINE, in the following cases:
   (89) - makes the entire algorithm succeed if it is the last function of the algorithm (89). Means the last function of the last topmost LINE (82).
   (83) - makes execution to jump to the next topmost LINE (82) if there's one. Sim calls the first atomic function on that LINE (78) and execution proceeds there.
   (92) - makes execution to jump back to the parent LINE (93) if the current LINE (94) was a branch in the algorithm. The function in the parent LINE that is the junction point (91) is called. Note: branches can be nested.
(b) the <FORK> function (78), in which case the execution flow jumps to the first branch LINE (93) as forked from this function. Sim keeps track on how many branches have been tried out for this sample run. In case an atomic function fails over one branched LINE (93), the Sim marks this branch LINE has failed and tries the next branch in pending (90). If this branch fails too, the Sim tries the next one (95) and so on until no more branch lines are left pending. If one branch succeeds though, the other branches that have been pending are discarded and execution continues from the branch that succeeded forward.

### THE BUY AND SELL FUNCTIONS

Especial atomic functions <BUY> and <SELL> when called and succeeded by the execution flow generate a trading signal (34). They normally lie at the very end of a topmost LINE (71) because the goal of any trading algorithm is to generate trading signals to its subscribers. That normally is achieved by executing a simple or complex sequence of functions, possibly trying out several branches of decision in the algorithm before reaching a final decision that is to buy or sell a security at this run. The last atomic function (77) is the result of such process.

### As per FIG. 5:

It may happen that the first function of the topmost LINE is a <FORK> function (78). When Sim starts executing the algorithm it immediately jumps to the first branch (93) and first function A (86) is called. If any of the functions A, B, (C|D) &E, F fail, then entire branch LINE (93) fails and execution jumps to the second branch (90) - function G is called (87). If any of the functions G,H,I,J fail, second branch (90) fails and execution flows to third branch (95) - function K is called (96). If any of the functions K,L&M fail, third branch (95) fails and since there are no more branches left to try out, the entire algorithm fails too for this sample run. Sim waits for the next sample to kick-in.

Given the algorithm in FIG. 5, there are five possible winning sequences that yield a trading signal at the end:
∘ A,B,C,D,F,N
∘ A,B,E,F,N
∘ G,H,I,J,N
∘ K, L, N
∘ K,M,N

Even if one line above yields a trading signal at the end (34), assuming the last function <N> (89) to be in fact a <BUY> or <SELL> function, Sim composes the signal and sends it and then keeps on waiting for the next sample. This process repeats itself endlessly until the Sim is deleted at day close or when the virtual position closes if the Sim runs an exit part of the algorithm. See Sim from section DEFINITIONS.

For completeness, here's the trading algorithm from FIG. 5 in XML form:

| | |
|---|---|
| <SELL_YYY> | 1 |
| <LINE line="setup"> | 2 |
| <Z attr1=".." attr2=".." ... /> | 3 |
| <X attr1=".." attr2=".." ... /> | 4 |
| </LINE> | 5 |
| | 6 |
| <LINE line="main"> | 7 |
| <FORK> | 8 |
| <LINE line="aa"> | 9 |
| <A attr1=".." attr2=".." ... /> | 10 |
| <B attr1=".." attr2=".." ... /> | 11 |
| <FORK> | 12 |
| <LINE line="aaa"> | 13 |
| <C attr1=".."... /> | 14 |
| <D attr1=".."... /> | 15 |
| </LINE> | 16 |
| <LINE line="aab"> | 17 |
| <E attr1=".."... /> | 18 |
| </LINE> | 19 |
| </FORK> | 20 |
| <F attr1=".." attr2=".." ... /> | 21 |
| </LINE> | 22 |
| <LINE line="ab"> | 23 |
| <G attr1=".." attr2=".." ... /> | 24 |
| <H attr1=".." attr2=".." ... /> | 25 |
| <I attr1=".." attr2=".." ... /> | 26 |
| <J attr1=".." attr2=".." ... /> | 27 |
| </LINE> | 28 |
| <LINE line="ac"> | 29 |
| <K attr1=".." attr2=".." ... /> | 30 |
| <FORK> | 31 |
| <LINE line="aca"> | 32 |
| <L attr1=".."... /> | 33 |
| </LINE> | 34 |
| <LINE line="acb"> | 36 |
| <M attr1=".."... /> | 37 |
| </LINE> | 38 |
| </FORK> | 39 |
| </LINE> | 40 |
| </FORK> | 41 |
| <N attr1=".." attr2=".." ... /> | 42 |
| </LINE> | 43 |
| </SELL_YYY> | 44 |

This is an exit algorithm's part as hinted by its name (line 1). This time there are two topmost LINES. First is called "setup" (line 2) and the second is called "main" (line 7). The usage of the first topmost LINE is to setup some global variables (more on that later) which are needed to be computed and executed just one time, when the Sim starts up. For instance, these functions may serve for computing some especial moving average or other indicator over the security's historical price data. That is just done once right in the beginning. This topmost LINE typically runs once along with the first sample fed to the Sim and makes the Sim jump immediately to the second topmost LINE "main", if successful. The LINE "main" is the one that is recurrently called on every subsequent sample run throughout the day. Notice that the first atomic function of the topmost LINE "main" is a <FORK> function (line 8) which makes the execution flow branch immediately to branch LINE "aa" (line 9). Sim keeps alternative branches "ab" (line 23) and "ac" (line 29) in pending in this order, in case branch "aa" fails somewhere over its sequence of atomic functions. If now branch "ab" is tried out and fails too, branch "ac" is tried. If this branch also fails too then there are no more alternatives to pursue from the main branch and the algorithm fails in its entirety. Notice in addition that some of branched LINEs, like "ac" have branches of their own (lines 32 and 36). In such cases, a branch fails if all their forked alternatives fail too.

### COMPOSE THE TRADING SIGNAL

To compose the trading signal the Sim extracts information found mainly from this last function (89). Namely the HEADER part of the signal can be extracted directly from the <BUY> and <SELL> functions. In detail:
a) date, time is part of this sample run
b) security (and market), trading algorithm's name is part of the Sim's launch parameters
c) the financial record of this run has the target price of the security in which signal is generated
d) stoploss and takeprofit as well as the strategy are XML attributes defined in the <BUY> and <SELL> functions, as well as the type of trade: long vs. short
e) function is able to compute the security's financial profile to obtain the liquidity and volatility
f) based on that two factors, function computes the recommended position size for this trade

The BODY part of the signal that holds the reason or reasons for this trading signal are composed by the Sim by following the winning execution line of the algorithm that made it succeed and by extracting from each atomic function the relevant information it needs. XML attributes called alertstring (optional) are taken out from each atomic function in reverse-order from the winning sequence and collected to compose the "reasons" part of the signal.
See also Trading Signal from DEFINITIONS section.
When a trading signal is going to be generated after algorithm is executed successfully, the Sim knows what the winning execution line was. For FIG. 5, it may be one of the six lines mentioned above. The HEADER is extracted from the <BUY> and <SELL> functions. As for the BODY, the Sim runs through the winning execution line of the algorithm, in reverse order, excluding the last function, in the attempt to obtain the "reason" of why this winning line succeeded.
As an example, if the winning execution line is: G,H,I,J,N , then the Sim runs through the functions: J,I,H,G in this order and calling each one in sequence to extract their alertstring parameters. An atomic function may return an empty reason (""), which makes the Sim in this case to try the next function in order, until one of them returns a non-empty string or the end of the sequence is reached - in this case the reason is an empty string.

Reasons are coded as plain text in XML attributes of the atomic functions called alertstring. Coding and placing the "reasons" at the right atomic functions are an important job of the algorithm's design.

### ANATOMY OF AN ATOMIC FUNCTION

When a trading algorithm is loaded from XML into memory, each XML tag like <BUY> or <FORK> maps to a determined atomic function. XML attributes inside the XML tag are mapped to parameters of the function. When all the atomic functions are instantiated from XML, they become chained together like it appears in FIG. 4 and FIG. 5. An atomic function has none, if the first one (80); one (88), if a regular function; or two or more predecessors, if a junction point (89) and one successor or none, if the last function (89). Only the special function <FORK> (75) is allowed to have two or more successors. Each forms the beginning of a branch LINE in the algorithm. The XML attributes, as parameters of the function, serve to initialize the function's internal data and can also be re-evaluated each time the function is called during execution flow. Atomic function signature in XML, meaning the list of attributes it may accept, varies from function to function.
The <BUY> function for example has the following XML signature:

```
<BUY stoploss="expression" takeprofit="expression" strategy="name" />
```

The attributes stoploss, takeprofit and strategy will be re-evaluated each time the execution flow reaches this function in the algorithm and it is called. The expressions are evaluated at that time and stored as part of the internal model of the function for when the Sim asks it to deliver the parts of the text for the trading signal, like the HEADER.
To make it clearer: if the expression to be evaluated for the stoploss would be something like this:

```
 <BUY stoploss="low * 0.8" ... />
```

That means the trading signal that is going to be generated as the result of a successful sample run that was able to reach the <BUY> function would be to: buy the security at the current price as stated in the financial record of this run, with a stoploss set at 80% of the minimum price reached so far in the day. Here "low" used inside the expression is a reserved keyword (variable) that represents the lowest price the security had so far the day. It is also part of each financial record that feeds the Sim. See Financial Data Sample from DEFINITIONS section earlier.

Although signatures vary with each atomic function, in general functions would adhere to the following common signature:

```
 <FUNCTION criteria="expression" put="variable=expression; variable=expression; ..."
 grace="minutes" alertstring="expression" />
```

Note that there may exist atomic functions that have totally different signatures. Like the case of the <FORK> function (no attributes at all) or the <BUY> function. Other functions take more attributes besides those above. In the following sections the generic attributes above: "criteria", "put", "grace" and "alertstring" because they reveal important insights on how functions behave are described in more detail.

### CRITERIA

This XML attribute holds an expression that is evaluated every time the function is called in the execution flow. If it evaluates to True the function will pass, if not the function fails. If within the expression some data is undefined (i.e. variable hasn't been assigned yet) the function fails too.

### EXPRESSIONS IN ATTRIBUTES

In general, any XML attribute in atomic functions may hold a single value or an entire expression that is to be re-evaluated each time the function is called by the execution flow. The same behavior applies here too: if expression evaluates to an invalid value unexpected by the attribute (ex: attribute expects a decimal value but expression evaluates to a string) or if the expression contains any undefined variable, then the function immediately fails. Otherwise the function may pass, if all other criterion is also verified. Note that some functions, in addition or in alternative to XML attributes, may lead the function to fail or pass due to validations done internally by the function itself that aren't explicitly defined in XML attributes. In such cases "criteria" as XML attribute is probably not part of that function's signature.
Expressions are as rich as any expression in a modern programming language, regarding operators: numeric, boolean, string, vectors, etc; precedence rules, built-in functions: like min(), max(), avg(), sort(), diff() and many others; and the use of data variables. More on that later.

### PUT

In addition to "criteria" the function may have, it can optionally store values into data variables with the XML attribute "put". A single "put" attribute can assign values to one or more data variables by separating each individual assignment statement by semi-colons. Example:

```
 <PUT put="/name/own/='hugo'; /name/family/='santos'; /license/=45451" />
```

Here the <PUT> function is used to store values into three data variables called /name/own/, /name/family/ and /license/. The two first variables are assigned a string and the third variable is assigned a number. Variables can hold any primitive value types. There's no need to declare a variable's type before use. Values to assign can be the result of expression evaluation, besides just plain values like in the example above. If the resulting value cannot be obtained because some data variables are undefined inside the expression, the variable to be assigned is also left undefined but the <PUT> function won't fail because of this.

### GRACE

The grace attribute represents a grace time period, expressed in minutes, that the function must respect after pass. What that basically means is that after one pass, the function does not pass again and it's not even called again in the next sample runs after the pass for as long as the grace period lasts. Example:

```
 <CRITERIA criteria="/interestingprice/ > price" grace="120min" />
 <BUY stoploss="low*0.99" strategy="'beatInterestingPrice"' />
```

Function <CRITERIA> is followed by function <BUY> in a hypothetical trading algorithm. That means the execution flow calls first <CRITERIA> and only if it passes, function <BUY> is called in every sample run. Let's assume a sample run is executed every 2min throughout the trading day. Function <CRITERIA> first pass is when the variable /interestingprice/ holds a price value that's now higher than the current price on the sample. Here "price" is a reserved keyword in the expression that represents the current price value of the current financial record sample taken from the security. Imagine that the <PUT> function that had assigned an "interesting price" value to /interestingprice/ was done at some point in the algorithm earlier in the trading day. If that's not the case, which means /interstingprice/ is still undefined, notice that <CRITERIA> does never pass! After a first pass, <BUY> is called which has the effect of generating a buy signal at the end of this run (the trading signal contains a stoploss limit in this example that it is set to the minimum price of the security so far less 1%; on the FOOTER of the buy signal the text line: 'Buy strategy by [beatInterestingPrice]' would appear). Now, after the first pass, function <CRITERIA> ensues a grace period of 120min that makes the execution flow refrain from calling the function again until that period ends. Refraining from calling the function means basically it will fail. That means that even if the security's price continues to be higher than /interestingprice/ for many sampling periods after, the resulting buy signal will be sent only every 2h.

### ALERTSTRING

The alertstring attributes when placed assertively in certain atomic function locations throughout the trading algorithm present the reason or reasons as to why a given winning line was successful in yielding a trading signal. The designer must take care to position the alertstrings in meaningful functions in order to inform the potential subscribers of his algorithm why it has reached this signal that was sent. In some trading algorithms a single alertstring would be sufficient if it simply states something like: "Price is above xxx" where xxx is evaluated by taking the value of some data variable that was previously assigned at the appropriate time. This constitutes the BODY part of a trading signal when the sample run succeeds executing the algorithm in its entirety. See Trading Signals from section DEFINITIONS earlier. By taking the previous example:

```
 <CRITERIA criteria="/interestingprice/ < price" grace="120min" alertstring="'Price is
 higher than ' + aprice(/interestingprice/)" />
 <BUY stoploss="low*0.99" strategy="'beatInterestingPrice'" />
```

Here whenever there's a buy signal, once every 2h if price consistently stays higher than /interestingprice/, the buy signals that are generated would display the following text in their BODY part: "Price is higher than xx.xxx" whereas xx.xxx is the price value obtained from /interestingprice/ and converted via aprice() built-in function into a string. The + operator concatenates both strings.

In other trading algorithms, the set of possible reasons why a trading signal gets generated may be fairly more complex. Set of reasons ultimately depends on the number of winning sequences of atomic functions that make the algorithm succeed entirely. There can be several different such winning sequences. To make it manageable towards the designer, the Sim will go through the following steps in order to collect the reasons for a trading signal after a sample run succeeds:
1- imagine the winning sequence is composed of the atomic functions: <A1>,<A2>,<A3>,<A4>,<A5> (the last one is either a <BUY> or a <SELL> function that yields the trading signal)
2- Sim goes through that sequence in reverse-order: <A5>,<A4>,<A3>,<A2>,<A1> and tries to obtain the first alertstring that is a non-empty string. If function has no alertstring attribute defined (it defaults to "") or it evaluates to an empty-string, the Sim tries the next function in this reverse-order sequence until one gives out a non-empty string.
3- This non-empty alertstring IS THE BODY of the signal. This alertstring just obtained must now be transformed in the following manner:
4- Sim replaces any placeholders "/0" and "/1" that happen to be in either the beginning or the end of the alertstring. As follows:
5- The /1 placeholder is replaced by the alertstring in the immediate successor function of the reversed winning sequence. Ex: if <A4> had the first non-empty alertstring attribute and it reads:

   ```
<A3 criteria="price > close" alertstring="Price is higher than previous
close"
<A4 criteria="/interestingprice/>price" alertstring="/1 + 'Price is higher
than ' + aprice(/interestingprice/)"
```

   That means the BODY would display the reasons as follows:
   "Price is higher than previous close
   Price is higher than xx.xxx"
6- The /0 placeholder is replaced by any specific text the function defines internally based on its specific functionality. Ex: the <POLL> function works by polling security prices periodically (say every 15min). From the moment it activates until the polled price decreases from a given price reference, the function stores counters internally to keep track of this process. The /0 placeholder in its alertstring attribute would be replaced by plain text specific to such polling activity that the function has been registering so far in its internal data model.

### HOW AN ATOMIC FUNCTION USES DATA INTERNAL, LOCAL AND GLOBAL DATA

An atomic function can use internal data, local data and global data in order to carry out its functionality. They are also called variables in this scope, similar in fact to variables of any common programming language. Internal data are part of that function's internal data model and are just accessible from within the function. It is not seen by the trading algorithm in its XML structure. Examples are the counters the <POLL> function has internally to keep track of its state. Function's internal data can change every time the function is called during an execution flow of a sample run, regardless if it pass or fails, and it's kept in memory for as long as the Sim persists during the trading day. That's actually equally valid for all types of data, be they internal, local or global data.

While internal data only lives inside a function and it's not dealt with in XML, local data lives in XML and goes beyond one single atomic function. Local variables live only for the duration of a single sample run but they are accessible from all functions of a Sim. They are therefore scoped per Sim and scoped per sample run. As they live in XML they must be assigned via "put" statements and may be used in expressions inside XML attributes, such as in "criteria" for example. If left undefined (no value assigned) in an expression, they will make the expression fail and consequently the function fail as well. Because they live in XML, it's up to the designer to use local variables where appropriate in his algorithm. Because they're scoped per sample run, they're often used when there's a need for counters and loops in the algorithm. Local variables by convention use plain ascii words as names, if these aren't reserved keywords. Example of local data:

```
 <PUT put="i=0" />
 <PUT put="j=i+1" criteria="j>=1" />
```

Global data are also accessible from all the functions of the Sim but in contrast to local variables they persist in memory throughout the entire lifetime of the Sim. There are two types of global variables regarding their scope: the Sim-scoped variables and the Security-scoped variables. Because these also live in XML, all global variables need to be assigned through a "put" statement and can be used in any function inside expressions. If some global variables are undefined (not been assigned with any value) that in turn will make expressions that use them fail, hence the function also will fail when called.

### GLOBAL DATA

Global variables that are Sim-scoped exist per Sim and their names are scoped per Sim. Since given one trading algorithm there exists one Sim per security (for entry Sims), and one Sim per virtual open position (for exit Sims) such variables can be used and shared among all the functions of the trading algorithm (realized by one Sim) but cannot be shared between the entry part and the exit part of that same algorithm (run by different Sims!) and can neither work in tandem with a partnering trading algorithm. For instance, a certain "long" algorithm can be designed to work in tandem with a "short" algorithm, whose short signals (trading signals to sell short a stock for example) can be used by the first algorithm as sell signals to exit a position! The data between the two algorithms is only possible to share by using Security-scoped global data. This paradigm extends beyond simply handing out trading signals from one algorithm to the next partner algorithm. One algorithm could do some heavy-lifting calculations, like for instance calculating the closest resistance and support levels for securities it targets, and then store those levels into Security-scoped global variables, which can be disclosed to the wide community and to the retail traders, so that every other algorithm could use.

So to cover for those scenarios and more, there exists Security-scoped global data in addition to Sim-scoped data. Such global variables are accessible and shared between all Sims that target the same security. That also means names of Security-scoped variables must not clash between each other for all the trading algorithms that happen to target common securities. Some global variable names are reserved and can't be used for other purposes than for what they were designed for. Please read further ahead.

### HOW GLOBAL DATA IS USED

When the designer wants to use a global variable for his algorithm, for a given purpose, he chooses what type of scope the variable is bound to and assigns a name to it. The name must be free from use and must not be a reserved one. By convention in this embodiment, names of global variables follow the norm: /name/ or /name/subname/ if the global variable is Security-scoped. If the global variable is Sim-scoped, the name must start with an underscore "_": /_name/subname/. For example the global variable name /_increase/ is a Sim-scoped variable because it starts with an underscore.

In a previous example, the designer had picked the /interestingprice/ variable name for its algorithm. Its purpose was to capture and hold an interesting price level of the security at some point during the trading day. Say when the security's price had hit the 3-month highest. Later towards the end of the trading day, the current security's price is compared to that price reference kept in the global variable /interestingprice/. That's just an example how global variables are useful in the design of a trading algorithm. How they are used in fact and how many variables would be needed depends on the trading strategy the designer wants to come up with. The platform just provides the language and the infrastructure on which trading algorithms can be built.

Just like with internal data, global data persist during the entire day lifecycle of a Sim. At day close all data gets to be deleted along with all the Sims. Thus no data variables persist for the following trading day. A trading algorithm might need to reconstruct its state in the next day, as it won't get it from storage from a previous session. Notable exceptions to this ground rule are data within virtual open positions: reserved variables that hold financial details of an open position begin with /Position/"data"/ (example: /Position/price/ or /Position/stoploss/). These data persist from one session to another until virtual position gets closed. A few other exceptions to this rule exist (ex: hunching data for a security persist for more than one day) but are not the norm, as dealing with this kind of data persistence for more than a trading day makes the system far more complex to handle (for example: setup in backtests) and adds undesired complexity to the design of algorithms, without really adding any fundamentally strong feature. Ex: often with some inspiration, designer can "reconstruct" state from previous day sessions without the need of having durable variables in the design.

### RESERVED DATA

While designers may use choose local and global variable names for their algorithms, like /interestingprice/ above: global Security-scoped variable, other names are reserved in this embodiment and hold a specific meaning in trading algorithms so can't be used as custom variables. Designers would use such reserved names in XML expressions the same way as with any data variable. The system is in charge to assign a proper value to such reserved variables at the appropriate time for a given Sim and security during execution.

Some of the reserved names are:
▪ "security", "date", "time", "price", "open", "close", "high", "low", "volume" - these reserved variables are used to address items in the financial record of the current sample run. With each sample run, this record is refreshed with new financial data. Though for some like "date" or "open" it won't ever change throughout the day. See Financial Data Sample from DEFINITIONS section.

### Example:

```
     <PUT put="/interestingprice/=price" grace="" />
```

When this function is called, it puts the price taken from the current financial record sample into the designer's global variable he called /interestingprice/. This variable is Security-scoped. Other trading algorithms that use the same security as financial target should not reuse that name because may give rise to conflicts. Unless of course, if it purposefully meant as a design goal and algorithms are made to work together in tandem.

Other reserved names represent virtual positions:
▪ /Position/price/
   /Position/stoploss/
   /Position/takeprofit/
   /Position/loss/
   /Position/profit/ - these reserved variables are used to address the financial record of a virtual position. They're available to exit Sims as they are created to take up and run against one dedicated virtual position. The /Position/stoploss/ and /Position/takeprofit/ are the limits attached to that position. If a position has no takeprofit limit for example, this variable is left undefined by the system and shall make any XML expression that uses it fail. The /Position/price/ holds the settled price of the position in the respective portfolio after the virtual cost has been applied; the /Position/loss/ and /Position/profit/ are percentages that represent the current profit/loss ratio of the virtual position when compared against the price of the market.

### Example:

```
 <STOPLOSS mode="descend" loss="/Position/stoploss/" alertstring="/0" />
 <PUT put="/strategy/='stoploss'" />
 <SELL strategy="/strategy/" />
```

This exit algorithm issues a sell signal when the current security's price sets below the stoploss limit of the position. The function <STOPLOSS> above uses internal data of its own to keep track when the current market price dips (descends) below the price given by its "loss" attribute. In this case the stoploss limit attached to the position: the /Position/stoploss/ reserved variable. The BODY part, or the reasons of the sell signal, is derived from the single alertstring attribute the algorithm has. It's found in the <STOPLOSS> function. It reads "/0" which would translate to some internal text given out by the <STOPLOSS> function when exactly this situation occurs in the day session. This makes the function pass once. This example uses a /strategy/ global variable to pass the string 'stoploss' to the <SELL> function later. It will be used to compose the FOOTER of the sell signal. If in another branch of the exit algorithm a sell signal is going to be generated because of the takeprofit limit being hit, then the according value "takeprofit" would be stored into /strategy/ and passed to the <SELL> function at the end of the algorithm.

Now let's see how the algorithm would look like when having the two branches instead - the stoploss branch and the takeprofit branch lines:

```
 <FORK>
     <LINE line="stoploss">
          <STOPLOSS mode="descend" loss="/Position/stoploss/" alertstring="/0" />
          <PUT put="/strategy/='stoploss'" grace="" />
     </LINE>
     <LINE line="takeprofit">
          <CRITERIA criteria="price > /Position/takeprofit/"
          put="/strategy/='takeprofit'" grace="120min" alertstring="'Price hit the
          takeprofit limit at ' + aprice(/Position/takeprofit/)" />
     </LINE>
 </FORK>
 <SELL strategy="/strategy/" />
```

Given this exit algorithm as it is above, it's interesting to note that if the security's market price hangs in the middle of the "stoploss" and the "takeprofit" price limits, both the <STOPLOSS> and the <CRITERIA> functions fail and the <SELL> function never gets called because there's no other alternative branch LINE leading there. No sell signal is issued.

A security's profile is given in three reserved variables:
▪ /liquidity/
   /volatility/
   /volatility/atr/ - financial properties of the security obtained from recent historical data. Note that each Sim in the platform runs a trading algorithm against one security the algorithm targets. Each exit Sim runs the trading algorithm against the security of its virtual position. Thus, such reserved variables capture the profile for the security the Sim is interested in. That obviously varies from Sim to Sim. The first two yield a rating: 0..4, which tells how strong or weak is the security with respect to that property. If the security in question has not enough history collected so far (a new company that just went public for instance) then both /liquidity/ and /volatility/ are left undefined by the system and any expression in XML that uses such reserved data would fail and make the underlying function fail as well. That's applicable to all historical data. The /volatility/atr/ gives the average true range of the security (i.e. the average daily price range of the security, calculated over the past days).

Security's historical data are based on candlesticks:
▪ /Candlestick/n/open/
   /Candlestick/n/close/
   /Candlestick/n/low/
   /Candlestick/n/high/
   /Candlestick/n/volume/ - raw historical price action (and volume) of the security in the form of candlesticks. Candlesticks as global data have normally a granularity of days (n means days), but can have finer granularities like hours, or 10min, which are suitable best for day-trading algorithms. Assuming dailies, each candlestick represents the open, close, min and max prices of the security on the previous day=n, where n=1 means the day before "today" run i.e. yesterday, where n=2 means the day before yesterday. Where n=0 means today's run, which makes the system to keep updating its value constantly when new record samples become available. If n is beyond what's available as historical data for the security (ex: a recent company went public) then expressions that use /Candlestick/n/... will make the XML expression fail and consequently its atomic function. Please refer to Candlestick from section DEFINITIONS.

Some reserved variables represent technical indicators, like:
▪ /Candlestick/n/sma200/
   /Candlestick/n/sma50/
   /Candlestick/n/sma20/
   /Candlestick/n/ema8/
   /Candlestick/n/rsi/
   /Candlestick/n/macd/
   and more...
   - example of reserved variables representing technical indicators calculated from historical prices of the security. A brief description for just two of them follows:
      ∘ /Candlestick/n/sma50/ - means the 50-day simple moving average, which is obtained for day=n using the previous 50 days closing prices from that day and averaging them. For day=0, uses the most recent price obtained from the market as today's closing price. For n beyond what's available as historical prices to compute its 50-day moving average for day=n, the system leaves that variable undefined. That's the case for all technical indicators as well.
      ∘ /Candlestick/n/rsi/ - means the relative strength index. Normally obtained from the previous 14-days closing prices to day=n. For day=0, uses the most recent price obtained from the market as today's closing price. Obtained via a formula that yields a 0..100 value, in an attempt to identify overbought prices (rsi>=70) or oversold prices (rsi<=30).

Some reserved variables represent fundamental indicators, like non-limited to the quarterly EPS (earnings per share), market capitalization, P/E ratio, etc. applicable for securities that represent publicly traded companies.

### HUNCHING DATA

Data fed by hunches are handled in a different manner in this embodiment. They substitute placeholders in the algorithm the same way C macros (from the programming language C) are handled.

### Example:

```
 <FORK>
     <LINE line="setup">
          <PUT put="/willtrendup/ = False if #uptrend#=='' else #uptrend#"
          grace="600min" />
     </LINE>
     <LINE line="trendup">
          <CRITERIA criteria="/willtrendup/ and price > max(/Candlestick/1/high/,
          /Candlestick/2/high/)" grace="120min" alertstring="'Price is above the
          max of last two days: ' + aprice(max(/Candlestick/1/high/,
          /Candlestick/2/high/))" />
     </LINE>
 </FORK>
 <BUY stoploss="low*0.98" strategy="trendup" />
```

Here the algorithm starts by having an immediate fork with two branch lines. The first line is only run once because as soon as the <PUT> function passes (and it will, as nothing stops it from passing) it will ensue a grace period of 600min, which does never timeout for the entire course of the trading day! Nice touch. The <PUT> function's sole purpose is to setup a custom global variable called /willtrendup/ which holds a boolean value. Its value is taken after the hunching data called #uptrend#. This one has a special delimiter because it's no real variable it's just a placeholder (i.e. like a C macro) that gets substituted when the XML is loaded into memory for that Sim. What happens is that each security defines its own #uptrend# value in a static configuration file in the platform, outside the trading algorithm. By default the uptrend value is an empty-string for all securities when there's no hunches given. When a hunch is given by some expert user who thinks that security is about to enter into a long uptrend, in one example, platform updates the uptrend value for that security by changing the resp. static file. The next time (next trading day) the algorithm is loaded from XML for a Sim to run it, #uptrend# placeholders in XML get replaced by any values found on the static file for the security at stake. Placeholders such as #uptrend# are either substituted by "" (no hunches given) or by some value the static file defines for the security. So for Sims that are in charge for that security, the platform will swap out the #uptrend# placeholder with 'True' instead of blank '' and for that particular security only. Only then may <CRITERIA> attempt to pass: if in addition to being in an uptrend, the current price of the security climbs up to surpass both highs of the previous two sessions. Notice the use of both /Candlestick/1/high/ and /Candlestick/2/high/ reserved data inside the criteria and invoking the built-in function max() to obtain the max of the two prices.

This algorithm is not very interesting, and would probably fail in the submission phase. That's because it just yields buy signals for securities that have been previously hunched. Note that providing hunching data requires semi-automated work as hunches aren't dealt by the system purely automatically. As said previously, trading algorithms should merely attempt to improve its trading signals with hunching data, and not depend on hunches to merely work. With no hunches being given, this algorithm wouldn't yield any buy signal, ever.

Refer to Hunching Data from DEFINITIONS section for more information.

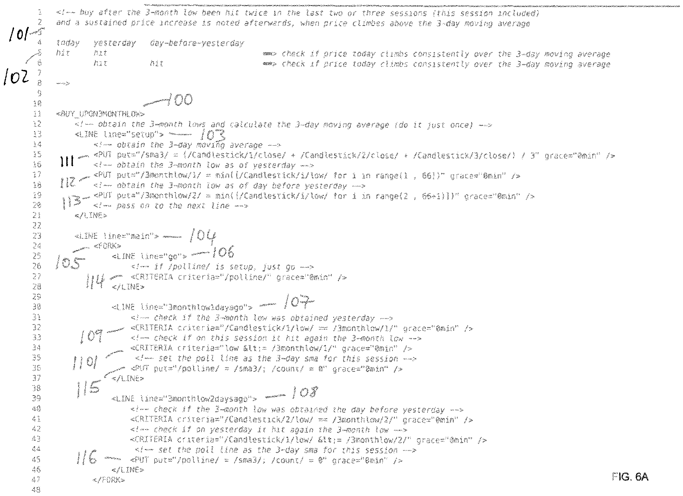

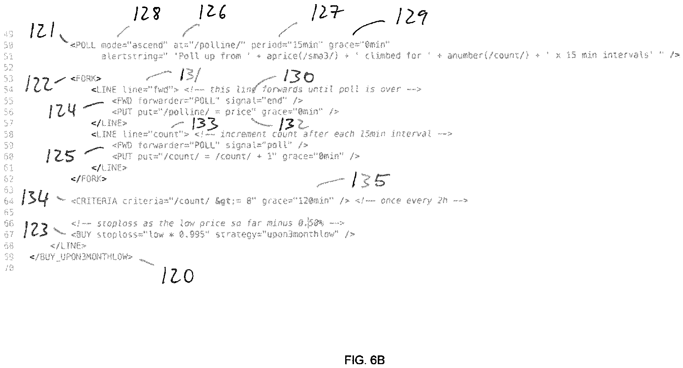

### With reference to FIG. 6 - A COMPREHENSIVE EXAMPLE OF A TRADING ALGORITHM

A fully working trading algorithm is depicted in FIG. 6, comprising of two parts in FIG. 6A and FIG. 6B. It is an entry algorithm and its goal is to issue buy signals.

The peculiar name of this buy algorithm is "UPON3MONTHLOW" (100). It is meant to read: "up on 3-month low". Its entry part name is "BUY_UPON3MONTHLOW" (100).

The trading algorithm UPON3MONTHLOW does not define its security targets within itself. The mapping of trading algorithms to its security targets is defined someplace else, in additional XML configurations files which are the product of negotiation and fine-tuning between the designer and platform personnel.

In one embodiment, for one given security the platform supports and actively captures samples, there exists a corresponding XML entry in a static file, indexed by security, that lists the trading algorithms for which that security is a target.

In another embodiment, such mapping is reversed: there exists a configuration XML file or files, indexed by algorithm, that lists all securities it currently targets. That's depicted in (24) of FIG. 1.

### Example of one such embodiment:

```
 <ENGL>
     MotaEngil
     <BUY_DEFLT run="default" from="" factor="7" />
     <BUY_GPNGOSHT run="gapngosht" factor="#factor#" uptrend="" />
     <BUY_UPON3MONTHLOW run="upon3monthlow" />
     <SELL_DEFLT run="default" />
     <SELL_GPNGOSHT run="gapngosht" uptrend="#uptrend#" />
     <SELL_UPON3MONTHLOW run="upon3monthlow" />
 </ENGL>
```

Here the security is a stock called "ENGL" from the Lisbon stock exchange. It is currently target for three trading algorithms: DEFLT, GPNGOSHT and UPON3MONTHLOW. These are split into their separate entry and exit parts. By convention entry parts begin with "BUY_" and exit algorithms begin with "SELL_" followed by the algorithm's name. Trading algorithms are run by Sims against one security as described in earlier sections. For this security in particular the Sims that run it are: "default", "gpngosht" and "upon3monthlow" for entry algorithms and for exit algorithms. Note that an exit algorithm is run by a Sim only if there's an open virtual position on ENGL caused by the corresponding entry Sim.

There's a Sim called "default" which runs the algorithm "DEFLT". This algorithm's entry part is described in a corresponding XML file having a top level <BUY_DEFLT> tag. This default algorithm will never issue trading signals and it's just there for housekeeping needs, such as logging, etc. It uses two XML attributes: "from" and "factor" as can be seen from the example above. Both will replace any placeholders named #from# and #factor# found within the XML of that trading algorithm, at the time it is loaded for the "default" Sim to run it against this security. While some of these XML attributes might serve as a kind of a special threshold that's been given to the security (and one that can't be computed otherwise by using technical indicators or other historical data inside the algorithm itself), in yet other flavors they may serve as Hunching Data to be given to the security. That's depicted in a more hunch-convincing way in the GPNGOSHT algorithm. The "uptrend" attribute is to be used as hunching data. For this particular security it currently holds a default value of "" for both entry and exit parts, so it's not been given a hunch for the moment. When a hunch for security ENGL is given though, the platform updates the "uptrend" attribute accordingly into that static XML file to a value different to "" - for example "True" (what that value really is depends on the algorithm). The next day the algorithm is loaded up for the Sim "gapngosht" to run against this security in particular, any placeholders #uptrend# embedded in the algorithm are substituted now by True. This state of affairs end when the hunching data for ENGL is revoked by the expert user or when platform staff decides to cancel the hunch for whatever reason.

Besides the default algorithm ENGL is also target for two other trading algorithms that will cause real trading signals to be sent: one is GAPNGOSHT and the other is our own UPON3MONTHLOW. Due to its particular design, our trading algorithm doesn't require any human-crafted specific thresholds or hunching data to work. Therefore no additional attributes with the exception of "run" are required to run the algorithm. Algorithm GAPNGOSHT has adopted a different approach. This is shown in the example above.

Let's take a closer look at the algorithm UPON3MONTHLOW in FIG. 6. It is the entry part because of the top level XML tag (100) <BUY_UPON3MONTHLOW>.
The XML comment describes what's the idea behind the algorithm (101). It says: "buy after the 3-month low been hit twice in the last two or three sessions (this included) and a sustained price increase is noted afterwards, when price climbs above the 3-day moving average".
So the algorithm tries to track down when has the 3-month low been hit twice for an security (in this case a stock) in the last two or three sessions, today's session included. (102) shows what the algorithm tries to achieve in a slightly better way. The 3-day moving average also referred to SMA/3 from technical analysis is just the average of the closing price of the security from the last three days: (C1 + C2 + C3)/3
The algorithm itself begins in (100) in FIG. 6A to finish in (120) in FIG. 6B.
By skimming through it, it is obvious to see that the algorithm is comprised of a series of atomic functions, including two topmost LINES (103) and (104) called "setup" and "main", and two <FORK> functions (105) and (122) from the last topmost LINE (104) and other functions as well, that have been placed with a given sequence and hierarchy in the XML structure.
Each FORK function splits the algorithm into two or more branch LINEs that spring from the main LINE (104). One such example is the <FORK> function (105) that creates three branch lines called respectively:
"go" (106),
"3monthlow1dayago" (107),
"3monthlow2daysago" (108).

The order is important. The first branch "go" (106) is always called first in the execution flow on every sample run. Only if branch fails is the second branch called (107) and so on.
The way the functions are ordered in a branch LINE tells how the execution flows. The first atomic function of the branch LINE is called (109), and after it passes the second in the LINE is called (110) and so on. If there are no more functions on the branch LINE (107), the execution flow falls back to the parent LINE (104) at a so-called junction point (121), which is an atomic function where branch lines collapse into the parent line. The last function of the main LINE is the <BUY> function (123), since the algorithm attempts to go long on stocks. It is when this last function is successfully reached by the execution flow that the buy signal is finally issued.

According to the execution flow as described earlier, for every financial sample (i.e. every 2min) the resp. Sim runs the algorithm once. It starts at the first function (111) at the top of the very first topmost LINE (103) until this LINE completely succeeds when its last function (113) is reached and passes on. The "setup" LINE (103) is only run once. It sets up a few global variables: /sma3/ holds the 3-day moving average of the security that is computed in (111) using the Candlestick notation representing historical security's data; /3monthlow/1/ (112) holds the minimum security's price attained over the last 65 days, which accounts to roughly the last 3 months of trading days. The calculation involves first building up a list of the low prices from the last 65 Candlesticks and then obtaining the minimum from that list using the min() function; /3monthlow/2/ (113) does the same thing but from yesterday's reference point instead. After this LINE is successfully completed (103), which should be on the first sample run unless security does not have that amount of accumulated historical data in the form of candlesticks (in which case LINE "setup" continuously fails), execution flow jumps to the next topmost LINE (104) and dismisses the previous one (103) from the execution flow for the rest of the day. Sim calls directly the second topmost LINE (104) for all following samples now. This main LINE has is the <FORK> function (105) as its first atomic function; execution is forked and then the first branch "go" (106) is tried out. On the very first run, the global variable /polline/ isn't set. That makes the CRITERIA function (114) fail immediately. As branch "go" (106) failed, the execution tries branch "3monthlow1dayago" next (107). The first function on that branch is another CRITERIA function (109).
In this branch line (107) the algorithm takes the conclusion that the 3-month low of the security has been hit yesterday and today it hit again that low (or will reach that low sometime today, since with every sample the "low" variable is readjusted throughout the course of the day).
If branch "3monthlow1dayago" (107) passes successfully at some point in time the two global variables /polline/ and /count/ become set up (115). That in turn makes the first branch "go" (106) to always pass, with the effect that no branch except "go" are executed ever again throughout the day! And so that achieves the desired effect. As soon as /polline/ is set, the execution flows from branch "go" (106), that always pass, into function on the junction point (121) and execution now flows in that way forever. If branch "3monthlow2daysago" (108) is successful instead, that's the second use case the algorithm covers, then /polline/ is also set (116) and execution flows the same way. On (121) there's a <POLL> function. This function is one of the many functions the platform supports for constructing trading algorithms. Another is the <FWD> function (124) and (125). The function <POLL> (121) uses specific attributes like 'mode', 'at' and 'period' which the designer sets in accordance to his design goals. He might want to set the 'period' to be 30min instead of 15min and the 'at' at a different price level if those values help him meet his strategy in the algorithm. These attributes make up the specific internal functionality of the function. Designers who'd like to use the <POLL> function must properly understand its specific functionality. In other words, they must look up the <POLL> function in the manual. They must understand what the function does and behaves when called: what internal states are modified, what criteria make it pass and what make it fail, and so on. Let me briefly attempt to explain what the function does in the next few lines.
It has an interesting functionality. The function's goal is to poll price action periodically. Its polling switch is either active or inactive - that's an internal state the function holds. It starts inactive and for it to activate itself (and so initiate polling) it must encounter the following conditions: (a) be called in the execution flow and (b) be called from the first branch line if it is junction point (which is the case) and (c) the current price (of sample) "ascends" past the base price stated in the "at" attribute (126). While in the inactive state the function when called just fails. While active the function passes on with each sample until it reverts back to its inactive state after certain conditions meet. When the <POLL> function activates, so does its polling activity. Polling consists in peeking the sampled price at regular intervals called the polling period (127) which in the example is 15min, and taking that polled price as a reference price. In mode "ascend" (128), the function remains active as long as with each poll the price keeps ascending. That is, the price from the current poll must be equal or greater than the reference price the function took on the previous poll. The polled price becomes the new reference and function keeps passing with every run. This state of affairs lasts until a poll comes in which the polled price dips below the reference price point. When that happens the function passes on one last time and then switches to inactive. When it switches to inactive it ensues a grace period (129) that makes the function fail until grace expires. In this case the grace (129) is 0min, so there is no grace period. That means the function can reactivate on the immediate run if conditions are met again. The last pass before the function switches to inactive is a special type of pass. Some functions are partners to <POLL> (they're made to work together) and know when type of pass occurs. That's the case of the <FWD> function (124) and (125). The first one (124) only pass on when its upstream <POLL> function gives that final pass switching off or ending the poll (130). Otherwise, this function just fails on regular passes after the <POLL> function. Branch line "fwd" (131) is there to adjust the "at" base price (126) of the <POLL> function after it switches itself off. The base price of the <POLL> keeps climbing up every time the function attempts to reactivate. The next activation of the <POLL> (121) would now require the sampled price to surpass a new reference price, which was set higher in (132).
As for the other branch line named "count" (133) it just keeps incrementing the global variable /count/ which is basically a counter for how many periods this polling activity lasts. It's easy to see that when prices dip below the reference price and stay below that price level the counter does not increment as the function gets deactivated. That reference price is now the "at" price (126) which makes the function switch on again. That means the price must climb above the new high value left from the previous poll for a new polling period to reopen. Only when a polling period is active is the /count/ incremented with every poll since and as long as the sampled price gets above the reference point.
On each polling period (15min) and on the last pass before switching off, the <CRITERIA> function (134) evaluates whether enough climbs (>=8) have been counted. If so, the algorithm issues a buy signal and waits for 2h (135) until another buy signal can occur. That's because of the grace period (135) setup on the last <CRITERIA> function. Note however that even after 2h has elapsed, the <POLL> function may not switch on again if prices don't surpass the last reference point set in /polline/.

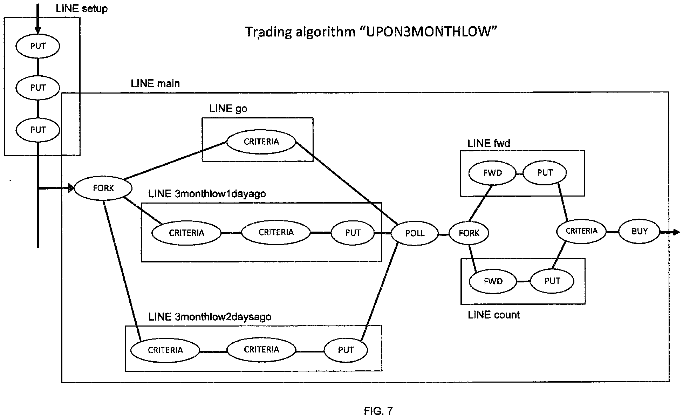

FIG. 7 depicts graphically the same trading algorithm from FIG. 6.

## Claims

1. A method for providing investment alerts to an online community of retail investors and retail traders, said retail investors and retail traders registered as users of the online community, the method comprising:
holding user accounts for the registered users, the user accounts including: personal data, a virtual portfolio, user-related configuration data;
receiving a steady supply of trading algorithms from the retail traders for attempting to match current financial market conditions, wherein each retail trader writing and submitting a trading algorithm becomes owner of said trading algorithm, each trading algorithm comprising:
an entry part having instructions for entering into positions; and
an exit part having instructions for exiting positions;
whereby both entry and exit parts coordinate with each other according to a design plan for attempting to yield profitable trades;
screening the received trading algorithms by backtesting against historical market data for assessing the performance and trading characteristics of said trading algorithms in a recent past;
publishing the performance and the trading characteristics of said trading algorithms to the online community as measured during backtesting;
running the trading algorithms live against real time market data, after said trading algorithms are selected to go through from backtesting;
continuously tracking and measuring the performance and the trading characteristics of the trading algorithms while running live;
continuously publishing said performance and said trading characteristics to the online community;
facilitating, from the users of the community, selecting trading algorithms based at least on the published performance and the published trading characteristics of said trading algorithms, hereby becoming subscribers of said trading algorithms after subscribing;
generating investment alerts from the trading algorithms running live in response to real time market data, the alerts being one of the following types:
an entry alert telling trading instructions for entering into a position over a security the trading algorithm targets, wherein the trading instructions indicate a qualified position-size for the security as opposed to a exact position-size, the qualified position-size resulting from a function of at least the security's assessed risk factors, whose factors include: recent volatility, recent liquidity;
an exit alert telling trading instructions for exiting a position, the trading instructions including no position-size related information;
an informational alert telling investment-related data about securities, the informational alert being neither for entering nor for exiting positions;
wherein the exit alert when matched against the corresponding entry alert yields a profit vs. loss ratio of one trade, wherein the performance of said one trade is driven solely by the price difference between the two matching alerts, said performance being also presented to the subscriber as part of the alert;
sending the alerts in real time to each subscriber for each subscriber to optionally follow up on the trading instructions told by the alert, whereby the qualified position-size present on the trading instructions is to be translated to a properly exact position-size by each subscriber in accordance to the risk profile and balance account of each;
for entry alerts, automatically opening a virtual position for each subscriber into the respective virtual portfolio, wherein the position being opened exactly mimics the trading instructions told by said entry alert, assigning however a qualified position-size instead of an actual position-size to the position; and
for exit alerts, automatically closing the corresponding virtual position, by exactly mimicking the trading instructions told by said exit alert;
thereby leading users as subscribers of a trading algorithm, through the automatic opening and closing of virtual positions, to acknowledge how said trading algorithm is performing live in the financial markets without having to take any action.

2. The method according to claim 1, further comprising:
preprocessing the generated entry alert before being sent to the user, based on an entry filter configured at the user-related configuration data; and
preprocessing the generated exit alert before being sent to the user, based on an exit filter configured at the user-related configuration data;
wherein the preprocessing leads to one of the following outcomes:
the generated alert being left unfiltered and being sent to the user as is;
the generated alert being filtered-out completely and not being sent to the user, the virtual portfolio of said user remaining unchanged;
the generated alert being filtered partly and sent to the user, the virtual portfolio of said user reflecting the changes made by the partial filtering.

3. The method according to claim 2, wherein the entry alert after being partially filtered indicates an increase in the position-size of a security instead of a qualified position-size.

4. The method according to claim 1, further comprising:
applying a virtual cost to the position being settled into the subscriber virtual portfolio as a percentage of a target price, to simulate trading fees charged by actual brokers and banks; and
yielding a final performance of each one trade by taking said virtual cost into account whose end result is to diminish the performance of said one trade by an additional cost.

5. The method according to claim 4, wherein the virtual cost to be applied varies according to the position being opened, a set of said virtual costs being configured at the user-related configuration data, with each virtual cost defined to be a function of:
the qualified position-size of the position;
the market exchange where the respective security is traded; and
the asset class of the security.

6. A social network platform for retail investors and retail traders, comprising:
a computer architecture blueprint for fulfilling all server-side cloud-based resources and business logic of the social network platform;
a plurality of actual deployments of said computer architecture blueprint, each deployment being hosted on cloud-based computing resources located in a predetermined world timezone, with each deployment being assigned to serve one said timezone and being assigned computing resources for:
covering the securities being traded at the financial market exchanges from said timezone;
running the trading algorithms targeting the securities traded from said timezone;
hosting the user accounts associated to users living in said timezone;
generating and sending real time investment alerts resulting from the trading algorithms running in said timezone to subscribers living in said timezone;
a mobile app for receiving the real time investment alerts sent from the platform into the user's mobile device as notifications, for permitting the user to follow up on the trading instructions promptly;
thereby supporting a means of improving the scalability of the platform towards a global scale and improving the latency of the communication between the app on the mobile device and the concerned deployment.

7. The platform according to claim 6, wherein the trading algorithms assigned to run in one deployment only target the securities served by said deployment.

8. The platform according to claim 6, wherein one timezone further comprises a plurality of deployments of the architecture blueprint, with each deployment being assigned computing resources for serving one determined asset class only from the entire range of securities covered by said timezone.

9. The platform according to claim 8, wherein the trading algorithms being served in said deployment only target securities from the timezone whose asset class matches the asset class assigned to the deployment.

10. The platform according to claim 6, wherein one deployment further comprises:
user accounts from outlying users as replicas from the user accounts originally hosted on a different deployment, wherein the user account data to be replicated is only the personal data part;
a new virtual portfolio specific to said deployment for each outlying user and separate from the original virtual portfolio of the outlying user; and
a new user-related configuration data specific to said deployment for each outlying user and separate from the original user-related configuration data of the outlying user;
thereby allowing users living in one timezone to get access to investment alerts from a different timezone by having specific virtual portfolios assigned in said timezone.

11. The platform according to claim 6, further comprising compensating the retail trader submitting a trading algorithm according to claim 1, by charging a fee to each user subscribing to said trading algorithm.

12. A method for providing investment alerts to an assembly of retail investors and retail traders, banded together to form a group of common investor traits, the method comprising:
advertising existing groups formed in the community and conveying traits of said groups to the users;
facilitating, from the users, joining and leaving said groups;
the group acting as one single user in the platform, according to claims 1 to 11, including the ability to subscribe to trading algorithms like any user, the group comprising an associated user (group) account including:
a list of users joined as members of the group;
a virtual portfolio, wherein said virtual portfolio is a shared portfolio amongst the list of users;
user(group)-related configuration data;
automatically broadcasting alerts to the list of users when said alerts are sent to the group as a subscriber of a trading algorithm; and
automatically opening and closing positions into the virtual portfolio associated to the group according to the trading instructions told by the alerts sent to the group.

13. The method according to claim 12, wherein a seasoned user of the community forming the group becomes a group leader of said group, wherein the group leader acts as a representative on behalf of the entire group in all affairs in the community, as if a single user according to claims 1 to 11.

14. The method according to claim 12, wherein non-seasoned users do not hold an associated virtual portfolio in the respective user account beyond the shared virtual portfolio associated to a group the non-seasoned users may join, thereby preventing, to said non-seasoned users, subscribing to trading algorithms outside the actions of the group.

15. The method according to claim 12 or claim 14, wherein non-seasoned users have associated at most one virtual portfolio, either from the dedicated user account or from a group account the non-seasoned user may join, per single deployment.

16. The method according to claim 12, further comprising splitting the fee charged to the group, as if a user according to claim 11, amongst the list of users, wherein the fee attributed to the group may be proportional to said list of users but never to the point where an individual user is charged less than a user behind a group.

17. A process for defining and running a trading algorithm suitable in a decentralized community-based environment, the trading algorithm comprising a declarative-based instruction set, aspiring to be a kind of "lingua franca" inside the community, to be copied and shared between the community members and applicable for a plurality of target securities in a single trading algorithm, the process comprising:
dividing the trading algorithm into two parts: an entry part for entering into positions, and an exit part for exiting positions, wherein both parts are written in coordination for attempting to yield profitable trades to subscribers;
defining a basic unit of computation (atomic function) for partitioning the trading algorithm into logically self-contained sufficiently coarse pieces of computation, an atomic function type offering diverse functionality compared to another type, wherein said atomic functions along with a own set of appropriate parameters are meant for copying and reuse into other trading algorithms;
aggregating the atomic functions into sequences, with each sequence (LINE) containing one or more atomic functions in a precise order;
linking the LINEs together to form a sequential hierarchical structure overall, wherein branch LINEs may fork-off a parent LINE in certain atomic functions (FORK functions), to collapse back into the same parent LINE in a following atomic function (junction function), said forking-off and collapsing of LINEs may be applied recurrently and multiple times;
attributing to each part of the trading algorithm a particular said given hierarchical structure, according to the owner design plan, wherein the structure contains at least one top-level LINE;
whereby the given structures attributed to each part and the contained sequences and atomic functions within may be used, in analogy to a genetic code, to identify the trading algorithm among the community;
defining a common set of data keywords as named placeholders for various data sources (variables) to be supplied to the trading algorithms while being run, to be used in the atomic functions according to the owner design plan;
preconfiguring a common set of data keywords or placeholders whose values are user-defined per security as opposed to system-defined;
loading said structure of atomic functions consisting the entry part into memory, separately for each security the trading algorithm targets, wherein each said security is served by an according executing instance (entry SIM) tasked with executing the entry part of the trading algorithm for said security;
loading said structure of atomic functions consisting the exit part into memory, separately for each virtual position the trading algorithm opened on a subscriber/security pair, wherein each said virtual position is served by an according executing instance (exit SIM) tasked with executing the exit part of the trading algorithm for said position;
supplying each SIM with a plurality of financial and market data and assorted indicators, both current and historical, related to the security assigned into suitable data keywords, wherein some data keywords may be left undefined if respective values are not available;
further supplying each SIM with the user-defined values for the security assigned into data keywords;
further supplying each exit SIM with data obtained from the position assigned into suitable data keywords;
calling each SIM on a periodical basis by feeding the SIM with a most recent market data sample and assorted indicators obtained on the sampling period related to the security assigned, wherein said market data sample and indicators are also supplied into specific data keywords;
upon the SIM being called on the sampling period, initiating executing the atomic functions laid in given hierarchical structure in order, through an execution flow orchestrated by the SIM, the execution flow comprising the steps:
calling the right atomic function in the execution flow sequence, starting at the first atomic function from the first top-level LINE;
reevaluating any parameters of the atomic function being called, including computing expressions where data keywords may be present in said parameters;
failing the atomic function immediately if at least: a used data keyword is undefined, a parameter yields invalid data, a criteria-based parameter evaluates to false;
executing the atomic function by having the atomic function perform the respective functionality or computation, based on the type and the parameters supplied, wherein said functionality may include: setting values into custom data keywords chosen by the retail trader for a given purpose, updating internal states, altering the normal execution flow, generating alerts;
either passing the atomic function if execution completes successfully, or failing the atomic function otherwise;
if preceding atomic function passes, calling the next atomic function in the execution flow sequence, if one exists, wherein the next function in sequence may happen to lie in one of the following: next in the same LINE; first of a subsequent LINE, wherein antecedent LINE is thereby completed and deemed successful in the sampling period; first of a branch LINE when the preceding function is a FORK function, a junction function when the preceding function ends a branch LINE, wherein said branch LINE is thereby completed and deemed successful in the sampling period;
if preceding atomic function fails, calling the first function on a subsequent alternative and untried branch LINE at the same hierarchical level of the LINE where the preceding atomic function lies, if one exists;
if preceding atomic function passes and no next atomic function is to be found in the execution flow sequence, ending the calling period successfully for the SIM and eventually generating an investment alert at said period, the investment alert being the result of the preceding atomic function execution; and
if preceding atomic function fails and no alternative branch LINEs are left to try, ending the calling period with failure for the SIM; and
calling each SIM repetitively for the next sampling period until no more sampling periods are left.

18. The process according to claim 17, further comprising:
assigning labels to meaningful LINEs within the trading algorithm;
when a calling period ends successfully for a SIM, collecting the labels of all deemed successful LINEs in said period in according order; and
presenting said labels within the generated investment alert, for letting users know through what branches and sequences the trading algorithm caused the alert.

19. The process according to claim 17, further comprising:
adding a specific parameter (alertstring) to meaningful atomic functions in the trading algorithm, wherein said specific parameter accepts a value evaluating to readable text;
hand-crafting said alertstrings by input from the owner of the trading algorithm according to claim 1, so to highlight meaningful readable texts, as reasons, made relevant by said atomic function when passing in the sampling period;
when a calling period ends successfully for a SIM, collecting the reasons from all passing atomic functions in said period in relevant order; and
presenting said reasons within the generated investment alert, for letting users know the reasons, adequately supplied by the owner at writing time, why the trading algorithm caused the alert.

20. The process according to claim 17, further comprising:
assigning specific data keywords to be global, so to be shareable between different trading algorithms by using said global data keywords in atomic functions;
whereby assigning a value to a global data keyword from one trading algorithm results in the same value being available at the same data keyword into another;
thereby leveraging custom computations carried out by one trading algorithm, after results are put into global data keywords, to be used by another.

21. A method for altering a normal flow of a trading algorithm based on hunching data fed by knowledgeable users or agents in the community in an attempt to improve the performance of said trading algorithm for all subscribers, the method comprising:
the owner writing the trading algorithm in such a way so to provision particular structure/contents driving the execution flow to be based on specific user-defined data keywords (hunching data), according to claim 17, to be employed in atomic functions, wherein the normal flow gets established when said user-defined data keywords are either left undefined or assigned default values;
feeding proper values to said user-defined data keywords at appropriate times for one or more target securities by knowledgeable users or agents interacting with the platform;
prior to executing the trading algorithm, preconfiguring said specific user-defined data keywords per security with values previously input from the knowledgeable users or agents if existing;
executing the trading algorithm according to claim 17; and
eventually generating investment alerts for all subscribers from a SIM serving a target security fed with hunching data, following an accordingly alternative execution flow.
